# EUROPEAN PATENT SPECIFICATION

(11) **EP 0 303 288 B1**
(45) Date of publication and mention of the grant of the patent: **22.10.1997**
(21) Application number: 88113161.9
(22) Date of filing: 12.08.1988
(51) Int. Cl.: G06F 5/06, G06F 13/00

(54) **Peripheral repeater box**
Relaisstation für periphere Geräte
Station de répéteurs pour des appareils périphériques

(30) Priority: 13.08.1987 US 85097
(43) Date of publication of application: 15.02.1989
(73) Proprietor: DIGITAL EQUIPMENT CORPORATION, Maynard Massachusetts 01754-1418 (US)
(72) Inventor: Newman, Bruce Eric, North Plainfield New Jersey 07060 (US)
(74) Representative: Betten & Resch

(56) References cited:
- EP-A- 0 054 490
- EP-A- 0 077 008
- WO-A-84/00836
- US-A- 4 272 809
- IBM TECHNICAL DISCLOSURE BULLETIN, VOL. 11, NO. 5, OCTOBER 1968, PAGES 462-463, NEW YORK, US; L.B. ANDERSON ET AL.: "SPLIT LOCAL STORE BUFFER"
- IBM TECHNICAL DISCLOSURE BULLETIN, VOL. 24, NO. 1A, JUNE 1981, PAGES 213-215, NEW YORK, US; N.H. MacLEAN, JR.: "BUFFER MEMORY ADDRESSING"

## Description

### RELATED APPLICATIONS

This application is related to the following applications filed on even date herewith. These applications contain, at least in part, common disclosure regarding an embodiment of a peripheral repeater box. Each, however, contains claims to a different invention.
D.C. Power Monitor (EP-A-0 303 289)
Tri-State Function Indicator (Appendix to EP-A-0 310 788)
Method of Changing Baud Rates (Appendix to EP-A-0 310 788)
System Permitting Peripheral Interchangeability (EP-A-0 310 788)
Communications Protocol (Appendix to EP-A-0 310 788)
Method of Packetizing Data (EP-A-0 303 991)

### BACKGROUND OF THE INVENTION

This invention relates to computer systems in general and more particularly, to a peripheral repeater box for use in a computer system to which a plurality of peripherals can be connected. It further relates to a method of communicating between a data transmitting device and a data receiving device, and to a system which includes a data transmitting device and a data receiving device.

In large computer systems, and particularly in systems which provide graphics displays, a plurality of different types of peripheral devices for providing input to the computer system are provided. For example, a single system may have as inputs a keyboard, a mouse, a tablet, a light pen, dial boxes, switch boxes and so forth. In a system with a plurality of such peripherals it is advantageous to have a device which can collect inputs from each of these peripherals and then retransmit the various inputs over a single line to the computer system. Such a device is referred to herein as a peripheral repeater box in that it acts as a repeater for each of the individual peripherals.

WO 84/00836 purports to describe multiplexed first-in first-out queues. Messages, comprising a plurality of multiplexed packets of information bits, are received on a transmission line from each of a plurality ot sources. All packets from the same source are stored in one of a plurality of first-in first-out queues. After at least one of said packets has been stored, it is available for being read out from the first-in first-out queue.

EP-0,077,008 A2 purports to describe an interface mechanism between a pair of processors such as a host processor and a processor in an intelligent controller for mass storage devices. Commands and responses are communicated as packets through a pair of ring-type queues.

"IBM TECHNICAL DISCLOSURE BULLETIN, vol. 11, No. 5, October 1968, pages 462-463, L.B. Anderson et al.: SPLIT LOCAL STORE BUFFER," purports to describe a local store for buffering data between a main storage and I/O devices. The local store is divided into two portions A and B which can transfer data between each other. The transfer of data from an I/O device to the main storage is accomplished by transferring data from buffer B to buffer A. The counters 12, 16 point to the location of data in respective buffers A, B. Counter 14 is used to determine when a full word is present in buffer B for transfer to buffer A. Once a full word is present in buffer B, the data is transferred from buffer B to buffer A for subsequent transmission to the main storage.

Accordingly, it is the object of the present invention to provide a data transfer between a transmitting device and a receiving device by means of a data buffer, wherein the data can remain in the buffer and do not have to be moved to accomplish a data transfer between a transmitting device and a receiving device.

Very often, different peripherals have the same type of plug. In typical systems of the prior art there is a requirement that each peripheral be plugged into a specific connection. If by mistake two different peripherals which have the same type of plug are mixed up, the inputs no longer react properly. There is thus, a need for in a peripheral repeater box the ability to plug different type of peripherals into the same connector and still be able to recognize which peripheral is connected.

Various peripherals are capable of operating at different baud rates. It is sometimes necessary to change baud rates. In systems using a peripheral repeater box, resetting of baud rates must be done both in the peripheral and the peripheral repeater box. There is thus, a need to provide a system in which baud rates can be set, such baud rates being automatically set both in the peripheral itself and in the peripheral repeater box.

Preferably, a peripheral repeater box of this nature, which will include its own processor, will be capable of running various levels of self test. Some indication should be given of the status of the peripheral repeater box, i.e. whether it is in a test mode or in an operating mode. In addition, since the peripheral repeater box will require a number of different power supplies to provide power to electronics therein, an indication of the proper operation of these supplies is also necessary.

Finally, there is a need to establish data protocols for the peripheral box to communicate with the peripherals and with the computer system. Ideally, such should be both simple, trouble-free and efficient.

### SUMMARY OF THE INVENTION

The present invention is defined in claims 1, 9 and 18. The dependent claims disclose particular embodiments of the invention.

The peripheral repeater box (PR box) of the present invention and/or of its embodiments provides all of the above noted functions in addition to others.

The PR box of an embodiment of present invention is used to allow the peripherals to be powered at the monitor site. The PR box collects the various peripheral signals using, a conventional RS-232-C or RS-423 connection, from seven peripheral channels, which are then packetized and sent to a host, e.g. a computer and/or graphics control processor, using RS-232-C signals. Transmissions to the peripherals are handled in a like manner from the host, i.e., receiving packets from the host, unpacking the data and channeling data to an appropriate peripheral serial line unit (SLU).

The peripheral repeater box of an embodiment of the present invention is particularly suited for use in a graphics system.

The communications between the PR Box and host are carried out with a novel protocol, which provides for reliable error free transmission.

The PR Box uses a system with circular queues and buffers to buffer incoming and outgoing messages to and from the peripherals. Messages are arranged in packets for transmission. The completion of a message from a peripheral is detected by counting bytes. Alternatively if the time between received bytes exceeds a predetermined amount, this is used to sense the end of a message. To keep communications active between the PR Box and the system, a "keep alive" timer is used. This causes a "keep alive" message to be sent if there has been no other communication within a predetermined amount of time.

In addition to providing a multiplexing/data concentration function for the peripherals, the PR box also implements a self-test check on its own logic (performed on power-up and on command request) and an external loopback function for manufacturing testing. The manufacturing test mode, which is an extended version of self-test, operates when the manufacturing jumper is detected in circuit. When in this mode the self-tests run continuously unless an error is detected at which time it will loop on the failing test. This mode requires a special loopback module.

A function LED and a group of 8 diagnostic LEDs are located on the back panel of the PR Box. The function LED is utilized to indicate which state the PR box is in, i.e., the function being performed. The current error status, if any, is reflected in the diagnostic LEDs. The diagnostic LEDs are also available to the host to provide additional status information in the case where the graphics system is unable to display messages on its video display. A command is available to the system by which to write an error code to the diagnostic display. In accordance with the present invention, the function LED is a tricolor LED permitting indication of one of three states of conditions of operation.

A DC power monitor is included to monitor the power supply and indicates power status with a bicolor LED. This monitor provides a rough indication of positive and negative 12 volt power supplies. If either supply is out of spec 10 to 15 percent then the LED will indicate a failure by changing its color. The DC power monitor is itself powered by a 5 volt supply. If the LED is out, this indicates failure of the 5 volt supply.

Peripherals which are supported by the disclosed embodiment of the PR Box include:
a keyboard;
a mouse;
a tablet; and
a dial box.

In addition, in the illustrated embodiment, three other channels are provided for future expansion to provide for a button box channel, a spare keyboard channel and a general spare RS-232-C channel.

The PR Box of an embodiment of the present invention permits interchangeability of the different peripherals. In other words, peripherals with the same type plug can be plugged into any of the peripherals ports and it is not necessary to ensure that a particular peripheral is plugged into a particular port. On power-up and each time a peripheral is plugged in or removed, the host checks the peripherals to determine what type of device it is and keeps track of that information.

A further feature of an embodiment of the present invention is the ability to change baud rates for those devices which support different baud rates. In accordance with the embodiment of present invention, a command from the host to change baud rates automatically resets the baud rate of the receiver in the peripheral box for the particular channel and another command sets the baud rate of the peripheral itself. First, a message is sent through the PR box to the peripheral. Then a command is sent to the PR box to change the baud rate of a UART (Universal Asynchromous Receiver/Transmitter) associated with that peripheral.

### BRIEF DESCRIPTION OF THE DRAWINGS

Fig. 1 is a block diagram of a computer system in which the PR box of the present invention may be used.

Fig. 2 is a basic block diagram of the PR box of an embodiment of the present invention.

Fig. 3 is a schematic diagram of the DC power monitor of an embodiment of the present invention.

Fig. 4 is a schematic diagram of the function indicator LED of an embodiment of the present invention.

Figs. 5A-C are a flow diagram of the firmware running in the PR box of an embodiment of the present invention.

Figs. 6A-H illustrate the transmission of packets through the use of circular queues and circular buffers according to the present invention.

Fig. 7 is a table tabulating the default baud rates for the different peripherals used in the preferred embodiment of the present invention.

Fig. 8 is a table showing the character times associated with each baud rate for use in interpacket timing according to an embodiment of the present invention.

Fig. 9 is a flow diagram illustrating the basic timing utilized for interpacket timing.

Fig. 10 is a diagram showing the configuration of the header byte field utilized with an embodiment of the present invention.

Figs. 11A-C are diagrams showing the message transmission protocol of an embodiment of the present invention.

Fig. 12 is a chart illustrating various states of the function LED and the diagnostic LEDs.

### DETAILED DESCRIPTION

### System Overview

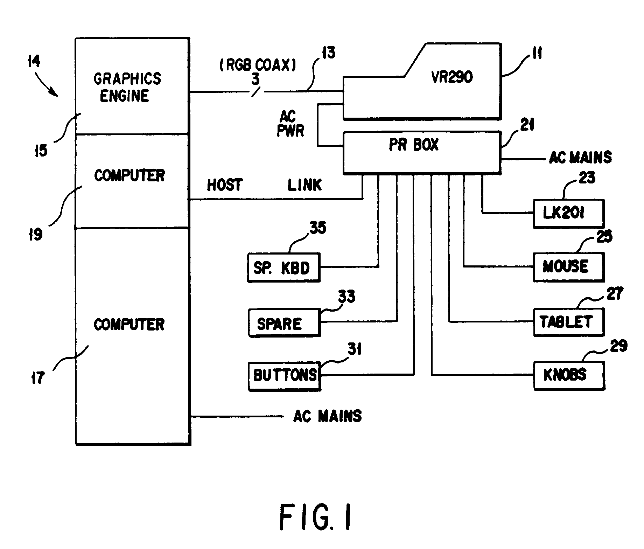

Fig. 1 is a block diagram of a computer system showing where the peripheral repeater box of the present invention fits into the system. The illustrated system is a graphics system. However, the present invention is applicable to other computer systems. Thus, there is illustrated a monitor 11 which receives video input from a RGB coax 13 which is coupled to computing apparatus 14 which does the graphic computations. Included in apparatus 14, as illustrated, is a graphics engine or graphics processor 15, a main computer 17, e.g. a Vax 8250 system, and a computer 19 acting as a control processor, which may be a Microvax computer. Computer 17 is host to computer 19 and computer 19 is host to the PR box 21 described below. Thus, hereinafter, where reference is made to a host, the reference is to computer 19. The operation of this part of the system is more fully described in Applications Nos. (EP-A-0 303 290) and (Appendix to EP-A-0 310 788), entitled Console Emulation For A Graphics Workstation and High Performance Graphics Workstation, filed on even date herewith. The peripheral repeater box 21 is illustrated in Fig. 1 along with the various peripherals which may be plugged into it. These include a keyboard 23, a mouse 25, a tablet 27, knobs 29, i.e. a dial box, buttons 31, a spare RS232 channel 33 and a spare keyboard input 35.

The peripheral repeater box is a self-contained microprocessor system which, in the illustrated embodiment, is located underneath the monitor. It is responsible for handling information flowing between the host and peripheral devices. This is a free running sub-system that performs a self-check of its own internal status at power up. After completing this task it initializes itself and continuously scans for activity from the host or peripherals.

Four peripheral channels (for keyboard 23, mouse 25, tablet 27 and knobs 29) and one command channel (for communications with the host) are provided to connect all the supported peripherals. In addition three spare channels for future expansion or special peripherals, e.g. the spare keyboard 35, button box 31, and spare 33 of Fig. 1 have been provided.

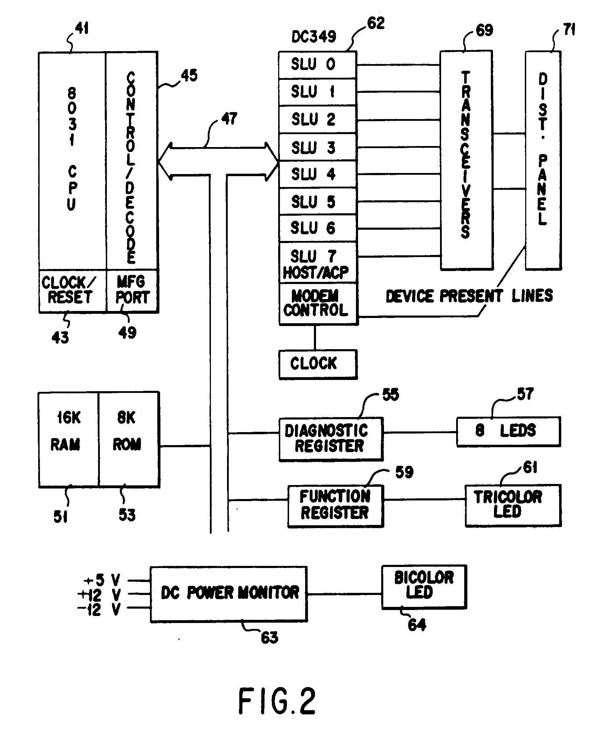

The sub-system is composed of a minimal system as shown in Fig. 2. Thus, there is illustrated an 8031 microprocessor CPU 41 which, in conventional fashion, has a associated with it a clock/reset unit 43 with a 12 mHz crystal oscillator. Coupled to the 8031 CPU is a conventional control decode block 45 which couples the CPU to a bus 47. Bus 47 couples the CPU to memory 49 which includes 16K of RAM 51 and 8K of ROM 53. The 8031 has no on chip ROM and insufficient on chip RAM. For this reason, the 8031 is used in an expanded bus configuration utilizing three of the four available general purpose ports for address, data and control. These are coupled through block 45 to bus 47. Enabling the external addressing capability for the expanded bus configuration is accomplished by grounding (through a jumper) the EA, external access, pin.

The low order address and data are multiplexed on the 8031, the address is latched during address time with a 74LS373 Octal latch strobed via the ALE (address latch enable) signal output from the 8031.

Bus 47 is also connected to a diagnostic register 55. Diagnostic register provides an output to a display 57 comprising 8 LEDs. Also coupled to bus 47 is a function register 59 which provides its output to a tricolor LED 61 to be described in more detail below. Also shown in Fig. 2 is the DC power monitor 63 which provides its output to a bicolor LED 64 to indicate under or over voltage conditions as explained in detail below.

Bus 47 also connects to Serial Line Units (SLU) 0-7 along with a modem control contained in block 62. Block 62 is what is known as an octal asynchronous receiver/transmitter or OCTALART. Such a device is manufactured by Digital Equipment Corporation of Maynard, MA. as a DC 349. Basically, the OCTALART comprises eight identical communication channels (eight UARTS, in effect) and two registers which provide summary information on the collective modem control signals and the interrupting channel definition for interrupts. Serial line units 0-6 are coupled to the seven peripherals indicated in Fig. 1. SLU 7 is the host link shown in Fig. 1. The outputs of the SLUs are coupled through transceivers 69, the outputs of which in turn are connected to a distribution panel 71 into which the various connectors are plugged. Block 69 includes EIA Line drivers, 9636 type, operating off a bipolar supply of +/-12 volts which translate the signals from TTL levels to a bipolar RS-232-C compatible signal level of approximately +/- 10 volts.

The host channel (SLU 7), keyboard channel and spare channel do not have device detection capability. The other five channels have an input line that is connected to the DCD (Data Carrier Detect) pin of the corresponding SLU of the OCTALART 62. When the pin is at the channel connector side is grounded the input side of the OCTALART is high indicating that a device is present on that channel.

A data set change summary register in block 62 will cause an interrupt if the status of one of these pins changes, i.e. high to low, or low to high level change. This indicates a device being added or removed after the system has entered operating mode. On power up the 8031 reads this register to determine which devices that have this capability are connected and enter this information into a configuration byte (a storage area in software) and is sent to the host as part of the self test report. This capability permits knowing which peripherals are connected to which ports and thus allows interchangeability of peripherals. The PR box, each time a peripheral is plugged in or unplugged, sends a message to the host allowing it to interrogate a peripheral and update a table which it maintains.

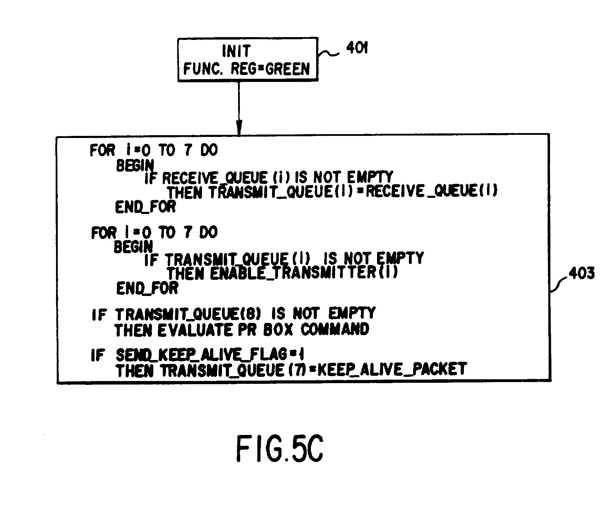

In the free running operational mode the PR box accepts data packets from the host through SLU 7 and verifies the integrity of that data. If the data is good then the PR box sends an ACK to the host, strips out the data or command from the packet and channels it to the designated peripheral through its associated SLU. If the data is bad, i.e. checksum error, the PR box sends a NAK to the host to request a re-transmission and throws away the packet it had received. These communications are described in detail below in connection with Figs. 5C through 11C.

The PR box can also receive commands to test itself and report status/configuration to change the diagnostic LEDs and to change baud rates while in operational mode.

Self-test mode verifies the integrity of the microprocessor sub-system. After termination of the internal loopback of the OCTALART, the sub-system will re-initialize itself and return to operational mode. Self-test is entered on power-up or by receipt of an executed self-test command from the host. This will check the functionality of the PR box logic.

An internal loopback sub-test is provided in the self-test, allowing the system to verify the integrity of the PR box logic under software control. While the self test is in operation there is no logical connection between the host and the PR box. This is true only during self-test. There is no effect on the peripherals when the PR box is running the internal loopback portion of self-test because no data is output at the transmit pins of the UART lines in OCTALART 67. Additionally data coming in from the peripherals will have no effect on the PR box during loopback test since all data at the UART receive pins of OCTALART 67 is ignored.

External loopback testing may be performed on an individual peripheral channel using the appropriate loopback on the channel to be tested. This is done from the host firmware. The peripheral repeater is transparent from this operation. This is the testing, explained further below which allows peripheral interchangeability.

A manufacturing test moded is provided by a jumper in the host channel loopback connector. This jumper is sensed on an 8031 on the power-up. In this mode the module runs all tests (as in self-test) on all channels and a device present test, and an external peripheral channel loopback test, continually. Loop on error functionality has been implemented to aid in repair.

The eight bit diagnostic register 55 with eight LEDs 57 attached provides the PR box status and some system status, (assuming some basic functionality of the main system). This register is used by the PR box to indicate its dynamic status during self-test or manufacturing test, to indicate, on entry to operational mode, any soft or hard error that may have occurred. The MSB, (bit 7) is used to indicate that a PR box error has occurred, bit 6 is used to indicate that a system error is displayed. If bit 6 is lit then the error code displayed is the system error, regardless of bit 7. This leaves 6 bits for providing encoded error responses. (The LED Error Codes are listed below.)

### The Power Monitor Circuit

The circuitry 63 to monitor the plus and minus 12v supplies operates from the +5v. supply. A single red/green bicolor led 64 is connected to the output of the power monitor circuit 63. The output indicators are as follows:

| LED Indication | Description |
|---|---|
| Green | All voltages present and within range |
| Red | Either plus, minus or both 12 volt supplies are approximately 15% out of spec or dropped out completely |
| None | +5v supply, all supply voltages dropped out or no AC |

The DC power monitor is a set of four comparators to check undervoltage and overvoltage out of range approximately 15% at nominal for the plus and minus 12 volt supplies. The circuit runs from plus five volts and uses a plus two volt precision reference applied to the appropriate reference input of each comparator. The output is connected to bicolor LED 64. Precision resistor dividers connected to the other input of each comparator, scale the test voltage down to the same range as the reference input.

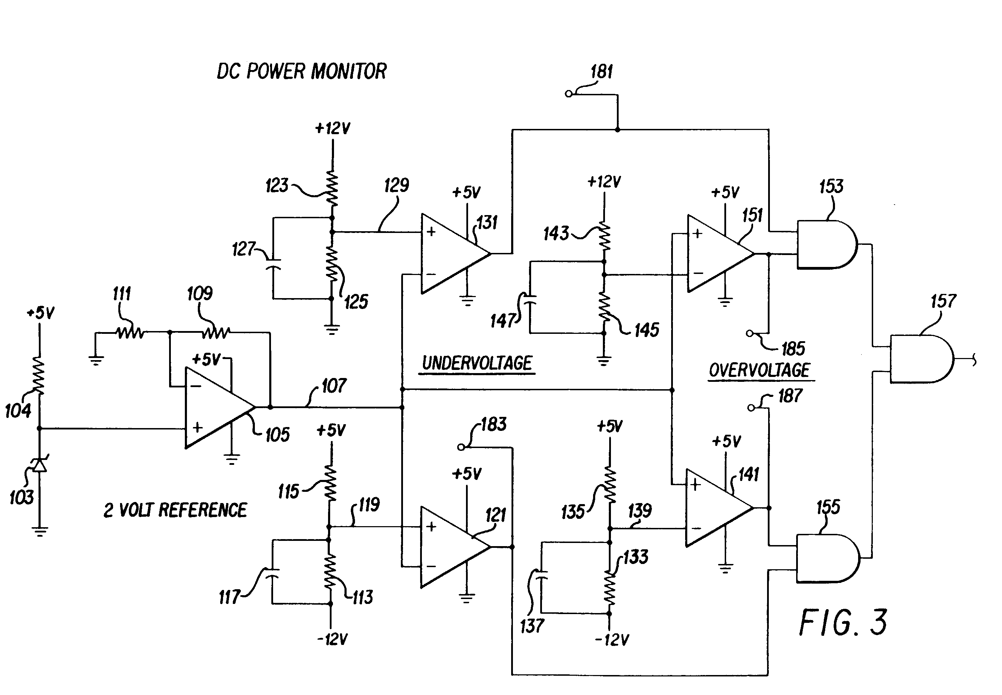

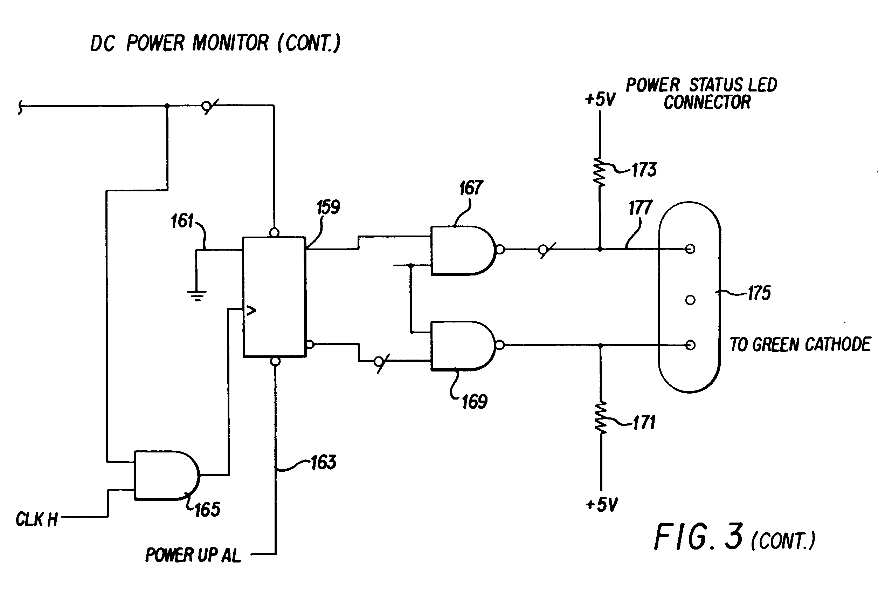

Fig. 3 is a schematic diagram of the power monitor for the peripheral repeater. The +5 volt supply is coupled across a series circuit of a resistor 101 and Zener diode 103. Zener diode 103 is a 1.25 volt Zener diode. The junction between resistor 101 and zener diode 103 is coupled to the non-inverting input of an amplifier 105. Amplifier 105 has its output on line 107 coupled through a resistor 109 to its inverting input. Also coupling the inverting input to ground is a resistor 111. In the preferred embodiment, resistor 109 has a resistance of 15k and resistor 111 a resistance of 24.3K. This gives a gain for amplifier 105 which results in a 2 volt output on line 107.

The -12 volt supply is coupled to a resistor 113 which is in series with a resistor 115 which has its other end coupled to the +5 volt supply. A capacitor 117 is coupled in parallel across resistor 113. Resistor 113, in the preferred embodiment, has a value of 15.8K and resistor 115 a value of 3.01K. If the -12 volt supply is exactly at -12 volts and the +5 volt supply at +5 volts, the resulting voltage at the junction between the two resistors, i.e., on line 119 will be approximately 2.8 volts. This 2.8 volts is compared with the 2 volts on line 107 in comparator 121.

The +12 volts supply is coupled to a resistor 123 in series with a resistor 125 which is connected to ground. Again, a capacitor 127 is coupled across resistor 125. The value of resistor 123 in the preferred embodiment is 8.25k and the value of resistor 125, 2.2k. Capacitors 117 and 127 are each preferably 0.01 microfarad. If the +12 volt supply is exactly 12 volts, with this divider, the voltage at the junction, i.e., on line 129 will also be above 2 volts. This voltage is compared in comparator 131 with the output of line 107.

In the case of comparator 121, the voltage to the non-inverting input from the voltage divider, if the full -12 volts is present, will be above the 2 volts on line 107. This will result in a high or logic "1" output from the respective comparators If the -12 voltage in question increases, however, above a predetermined amount, e.g. 15%, at some point the voltage on line 119 as the case may be, will fall below 2 volts and the output of comparator 121 will change from a logic "1" to a logic "0". Thus, comparator 121 detects an overvoltage condition for the -12 volt supply.

Similarly, if the +12 volt supply drops by, e.g. 15% the voltage on line 129 will fall below 2 volts and the output of comparator 131 will change from "1" to "0" indicating an undervoltage condition for the +12 volt supply.

To detect undervoltage on the -12 v supply, an additional voltage divider comprising resistors 133 and 135 is provided. Resistor 133 has its open end connected to the -12 volts supply and resistor 135, its open end to the +5 volt supply. Once again, a capacitor 137 is provided. For the +12 supply overvoltage detection, +12 volts is connected across a voltage divider comprising resistors 143 and 145 with the other side of resistor 145 connected to ground. Again a capacitor 147 is provided across resistor 145. Preferably capacitors 137 and 147 have a value of 0.01uf. Resistor 133 has a value of 12.1K, resistor 135 a value of 3.01K, resistor 143 a value of 11.8K and resistor 145 a value of 2k. The ratios in these resistor dividers are chosen such that if the + and - 12 volt supplies are at their normal levels, the voltages on lines 139 and 149 respectively will be below the 2 volt reference on line 107. As a result, the output of the respective comparators 141 and 151, since the reference in this case is provided to the non-inverting input will be positive or a logic "1" so long as the voltage level does not increase above a predetermined amount. If one of the 12 volt supplies goes above a preestablished level, then the voltage on the inverting input of its comparator will exceed the voltage on the non-inverting input and the state of the comparator will change from a logic "1" to a logic "0".

Note that for the minus 12 volt comparators the voltage is biased up with the plus five volt supply, this is done to keep negative voltages from being present on the inputs of the comparator.

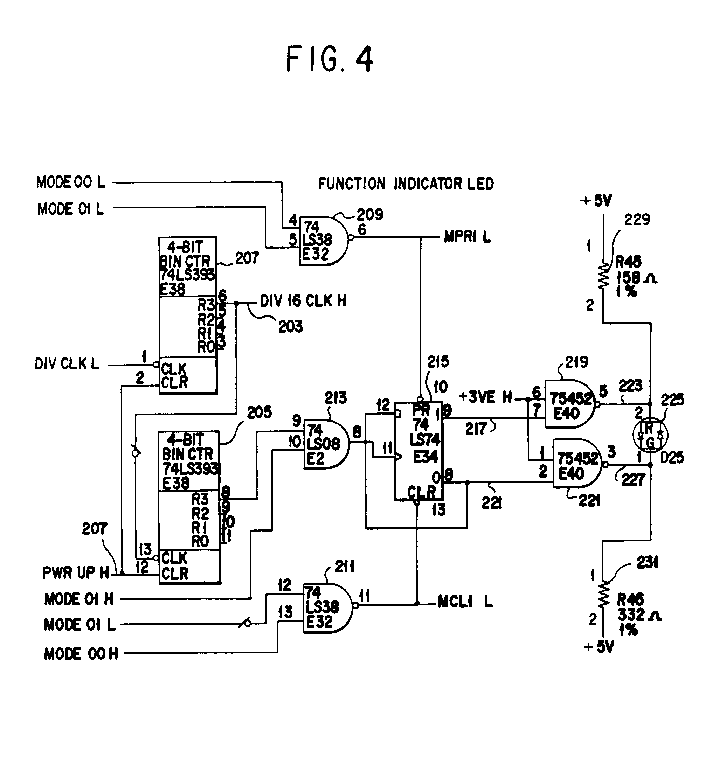

The outputs of comparators 131 and 151 are combined in an And gate 153. Similarly, the outputs of comparators 121 and 141 are coupled to an And gate 155. The respective outputs of these And gates 153 and 155 are inputs to an And gate 157. And gate 157 is coupled to the preset input of a D-type flip-flop 159. The input of this flip-flop is coupled to ground by a line 161. Its clear input is coupled to a "power up" signal on line 163 so that the flip-flop is cleared on power up. Its clocking input is coupled to the output of an And gate 165 which has as one input a clock signal obtained from a divide by 16 clock described in connection with Fig. 4 with a frequency of about 30 KHz and has as its other input, the output of gate 157.

The logic "1" output of flip-flop 159 is provided as an input to an Nand gate 167 and the "0" output to an Nand gate 169. The second inputs of these Nand gates are a 3 volt signal. The outputs of Nand gates 167 and 169 are coupled to pull-up resistors 171 and 173 which are connected to +5 volts. They are also coupled to the red and green cathodes of a bi-color LED 175.

If the voltage levels are as they should be, there will be no output from gate 157. In that case, the flip-flop 159 will remain in its reset state and an output will be provided from its "0" output into gate 169 which will provide a" 0" or ground level to the green cathode turning on the the green cathode to indicate proper operation. Should an undervoltage or overvoltage occur, the output of gate 157 will set flip-flop 159 through its connection to the preset input. As a result, an output will be provided on line 177 to the red cathode indicating that there is a problem in the power supply. The outputs of the four comparators are normally high and any fault detected will cause that output to go to low setting flip flop 159. The power problem can than be diagnosed by checking the test points 181, 183, 185 and 187 to find out which comparator is providing a signal indicating a voltage is not within tolerance. Upon correction of the defect, the preset signal is removed and the "0" at the D input, which is connected to ground, is transferred to the "1" output. The "0" output becomes high and the green cathode of LED 125 is lit.

Thus, as long as a fault condition exists the clock will be blocked and flip flop 159 will remain set. However, as soon as the fault condition goes away the clock will be enabled loading a zero in and thereby clearing flip flop 157. This has been done so that a transient condition will not latch up the indicator but rather that the indicator will indicate a hard fault condition.

### The Function Monitor

As shown in Fig. 2, a tristate LED 61 is connected to the output of two bit function register 59. This is used to give visual indication of what mode or function the PR box is performing at that time.

| LED Indication | Description |
|---|---|
| Yellow | Self-test mode being executed |
| Red | Manufacturing test being performed |
| Green | Operational mode active |

The circuit for driving, function indicator LED 61, is illustrated in FIG. 4. Register 59 indicates which function the PR box is currently performing, i.e. self-test, operation or manufacturing modes. It is a two bit register made up of a 74LS74 dual D type flip flop using 2 bits of a 74LS244 driver for read back. Each flip flop in the register has both a noninverted and an inverted output. Thus, the bit 0 flip flop provides a mode 00L signal and a mode 00H signal and the bit 1 flip flop a mode 01L signal and a mode 01H signal. The read back function has been added so that correct operation of the register hardware, exclusive of the LED can be checked automatically by the self-test software. The function is indicated by a single bicolor LED 61 operated in a tristate mode to produce three discrete colors.

A clock signal is provided as an input to a four-bit binary counter 201 to provide a divide by 16 clock output on output line 203. This is the clock which is provided as an input to the power monitor circuit previously described in Fig. 3. The output on line 203 is provided as an input to a second four-bit binary counter 205 where the signal is again divided by 16 to obtain a clock of approximately 19 KHz. Both counters 201 and 205 are cleared by a power up signal on line 207.

Signals mode 00 low and mode 01 low from function register 59 are provided as inputs to a Nand gate 209. Mode 00 corresponds to bit 1 and mode 01 to bit 2 of two bit register 59. Similarly, signals mode 01 low and mode 00 high are provided into a Nand gate 211. Mode 01 high is provided as an input to a Nand gate 213 which has as its second input the output of the binary counter 205. The output of this gate is the clock input to a D-type flip-flop 215. The "1" output of flip-flop 215 on line 217 is coupled as one input to Nand gate 219. The "0" output on line 220 is coupled as one input to Nand gate 221. These gate comprise a 75452 dual peripheral driver. The second input to Nand gates 219 and 221 is a three volt signal. The output of Nand gate 219 on line 223 is coupled to the red cathode of a bicolor LED 225. Similarly, the output on line 227 is coupled to its green cathode. Each of the cathodes is powered by plus 5 volts through resistors 229 and 231 respectively. These are open collector devices and thus the power for the LED is provided through the two resistors 229 and 231 tailored to operate the two LED sections at the same optical luminescence. Note that the heavier peripheral driver is required since, regardless of which LED is enabled, current flows through both resistors at all times.

In operation, if both modes 00 and mode 01 are low, the output of gate 209 will be a logic "1" and the flip-flop 215 will be preset thereby providing an output on line 217 which is coupled through Nand gate 219 to energize the red cathode of diode 225. If mode 01 is low and mode 00 is high an output from gate 211 will cause flip-flop 215 to be cleared and an output on line 221 will result causing the green cathode to be energized. If mode 01 is high then the clocking signal will be provided at the output of gate 213. Because mode 01 is high, neither Nand gate 209 or 211 will provide an output to cause the flip-flop 215 to be preset or cleared. In a D-type flip-flop, the clock signal will cause whatever is at the D input to be transferred to the "1" output. The D-input is tied to the "0" output on line 221. Thus, if, for example, line 221 is "0" then the "0" will be transferred to the "1" output on line 217 at which point line 221 will come to a logic "1" level. On the next clock cycle this logic "1" will be transferred to the "1" output on line 217. As a result, the red and green cathodes will be alternately energized and, because of the clock rate, it will appear to the observer to be the color yellow.

### PR Box Operation Overview

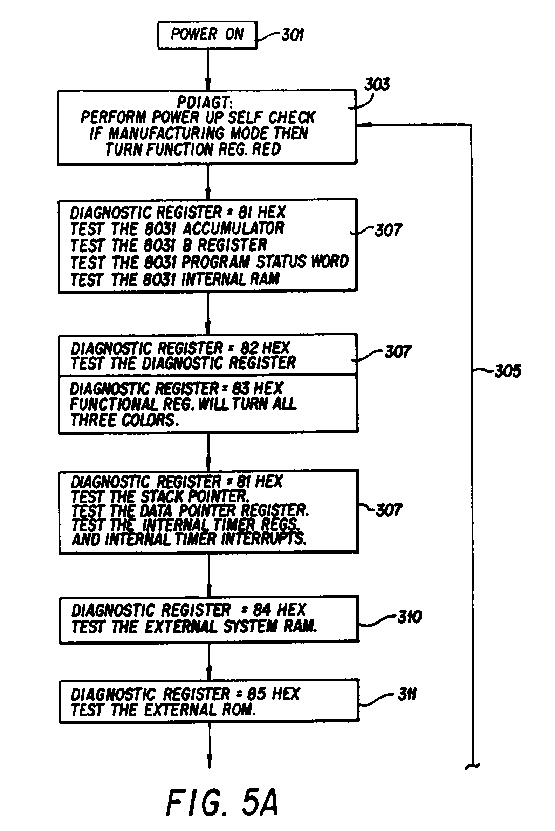

The PR box ROM 53 contains self-test and operational firmware. This firmware is contained in 4K bytes of ROM, though there is 8K bytes reserved for it. A flow diagram for the firmware is set out in Figs. 5A-C.

On power-up indicated by block 301, the on board diagnostics will have control of the PR box as indicated in block 303. The diagnostics will perform tests on the PR box logic and do an external loopback and test if pin 7 on the 8031 port 1 is grounded (signifying manufacturing mode). In manufacturing mode the diagnostics will loop forever via loop 305 and not go into operational mode. This is done via detection of the loopback connector (pin 7) on power up. If an error is encountered during manufacturing mode, the diagnostics will loop forever on the test that encountered the error.

Registers 55 and 59 with LEDs 57 and 61 (see Fig. 2) attached can be viewed from the outside of the system box. Diagnostic register 55 as noted above is 8 bits wide with Red LEDs. These LEDs report errors for the PR box and/or the system. As also described, the function register 59 is two bits wide with a single red/yellow/green LED. When in manufacturing mode, the function LED is red as indicated in block 303. On power-up, during other than manufacturing mode, the function LED will be yellow. In operational mode it will be green.

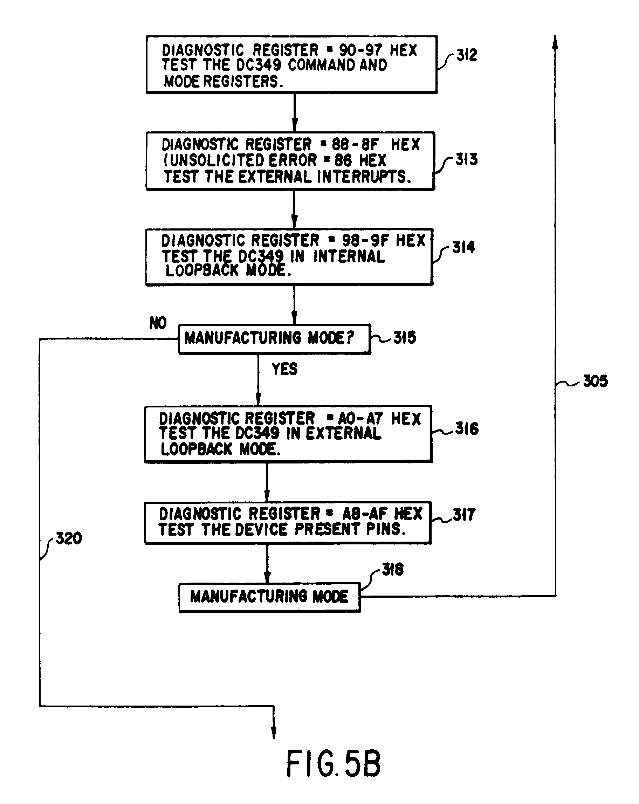

The various tests performed on power up are indicated by blocks 307-314. If in manufacturing mode, as checked in block 315 of Fig. 5B, the test of blocks 316 and 317 are also performed before entering block 318 to loop 305.

If, on power up, the PR box has an error that will make the PR system unusable, i.e. interrupt, 8031 errors, the function LED will stay yellow, an attempt to put the error code in the diagnostic register will be made, and the PR box will not go into operational mode.

If there are no errors or errors that will not make the system unuseable, and the system is not in manufacturing mode, path 320 will be followed to block 401 of Fig. 5C and the function LED will turn green and wait for the host to ACK/NAK, the diagnostic report to establish the link between the host and the PR box. If the link is never established, the error code for NO host is placed into the diagnostic LEDs, and the PR box will go into operational mode. If the communications link is later established, the error code will be cleared.

If there are soft errors (diagnostic register or function register) the PR box will go into operational mode of Fig. 5C and carryout the background process. However, any LED indication may be incorrect. Except for a dead system, i.e. 8031 failures, the PR box will attempt to go operational mode, displaying , if possible, the point at which it failed the self-test, (test number).

After the power-up diagnostics have been completed, control is passed to the operational firmware. In this mode, the firmware will keep the link between the host and the PR box active, and mux/demux commands/data between the peripherals and the host. This operation is described in detail below.

The diagnostics/operating system of this system are ROM based and run out of the 8031 microprocessor. The PR box firmware is compatible with the existing peripherals, and adheres to a communications protocol developed for the host PR box link discussed below.

The diagnostics are the first part of the firmware to run on power-up of the PR box. The diagnostics leave the system in a known state before passing control to the operating firmware. Upon completion of testing the PR box, the system RAM 51 is initialized, queues are cleared, the UARTs in in OCTALART 67 are set to the default speeds and data formats, the diagnostic and mode registers 55 and 57 are set with the appropriate values, and a system status area is set up that contains the status of the PR box.

Once the diagnostics are complete, the diagnostic report is sent to the host, and the PR box goes into operational mode. If there are no other messages to send, the PR box will wait 10 seconds for an ACK/NAK before placing an error code for "No communications link" into the diagnostic register 55. An ACK/NAK timer is provided for all other packets and times out at 20 mSec. Once operational, the UARTS are enabled to allow communications between the peripherals and the host. A keep-alive timer is also enabled in order to keep the host link active.

### Operational Mode

In this mode, the PR box 21 is the central communications device sitting between the peripherals and the host 19. (Refer to Figure 1 block diagram). Before detailing this mode, some basic terminology and memory allocation utilized on the PR box must be discussed.

A page of memory is 256 bytes in length. The low order address of the beginning page of memory is zero, the upper byte is from 0 to 255. In this description, the term "port" is used interchangeably with "channel" and refers to the peripheral port.

The 8031 has 128 bytes of on-chip RAM. Of the 128 bytes, 36 are utilized for front, rear, receive and transmit queue pointers. There is a front and rear queue pointer for each receive and transmit queue. Receive and transmit queues are allocated for each SLU port and the command queue to the PR box. There are eight ports and one command channel, thus, there are 18 queues and 36 pointers. Listed below are the names given to the respective queue pointers.
- REAR_RX_QUE_PTR: A table containing the rear receive queue pointers for ports 0-7, & the cmd que 8
- FRONT_RX_QUE_PTR: A table containing the front receive queue pointers for ports 0-7, & the cmd que 8
- REAR_TX_QUE_PTR: A table containing the rear transmit queue pointers for ports 0-7, & the cmd que 8
- FRONT_TX_QUE_PTR: A table containing front transmit queue pointers for ports 0-7, & the cmd que 8

The receive and transmit queues are maintained in off-chip RAM. Each queue entry is an address of the buffer received, or the buffer ready to be transmitted. Each entry is a word in length, a word being 16 bits. The first byte is the low order address, and the second byte is the high order address. No buffers are moved, only buffer addresses. Listed below are the names assigned to critical memory locations.
- RX_i_QUE: Where i=0 to 7, and the CMD que-1 page (256 bytes-128 msg ptrs)
- TX_i_QUE: WHERE i=0 to 7, and the CMD que-1 page (256 bytes-128 msg ptrs)
- CHi_BUFFER: Where i=0 to 7. Buffer space for each port. Ports 0 to 7 are the following sizes 3/4K, 2K, 2K, 1.5K, 3/4K, 3/4K, 3/4K, 2.75K respectively.
- RX_BUFFERS: 16 bytes (8 addresses, one for each SLU, there is no buffer associated with the command queue) - Contains the next free byte in each ports buffer.
- TX_BUFFERS: 16 bytes (8 addresses, one for each SLU, there is no buffer associated with the command queue) - Contains the next byte to transmit for each port. (Transmitter interrupt sets this up)
- TX_SIZE_TBL: Number of bytes left to transmit for each channel. (8 locations)
- RX_TIME_OUT: Timer bytes for each receiver channel. For inter-character timing. (8 locations)
- PORT_TIME_OUT: Timers for each channel. Set to lOmS when a queue is overflowed. (Port is turned off for 10mS) (8 locations)
- KA_TIMER: Keep alive timer. A 10 second timer which is reset to 10 whenever a packet is sent to the host. If the timer times out, a keep alive packet is sent to the host.
- ACK_NACK_TIMER: Timer set to 20mS after the checksum on a packet is sent to the host. (The timer is cleared if it receives an ACK or a NACK in this time period. If an ACK/NACK is not received, an error LED is set on the PR Box.)

The method by which all pointers, queues, buffers, and tables are accessed is by getting the base address (or base page), and adding in the current channel number (or a multiple of the channel number). For example, to access the channel 3 receive queue, the base page of the receive queues is taken. The upper address e.g. BASE_Rx_PAGE, which is the base for all receive queues is taken and the channel number is added to it (3 in this case) Once this is done, the value pointed to by FRONT_RX_QUE_PTR plus the offset of 3 is used as the lower address for the front pointer of channel 3. The channel number is obtained easily by reading it from a register in the OCTALART which, while in an OCTALART interrupt, stores the number of the channel causing an interrupt. Thus, for exmaple, if data comes in from channel 3, it causes an OCTALART interrupt. The channel (3) is stored in an OCTALART register. The PR box reads this register and add its value (3) to the base values and this way quickly and easily obtains the necessary addresses for the pointers etc. for channel 3. Thus, all the queues, buffers, etc. can be treated generically by common subroutines, and interrupt routines, with the exception of Channel 7, which is treated slightly differently because it is the channel to which the host is connected.

All queues and buffers are circular. The queues are circular by virtue of the fact that they are only one page in length. The upper page address is loaded directly into the P2 register of the 8031. The front rear receiver/transmit queue pointers are loaded directly into register R0 or R1 of the 8031 which can be used for external accesses. Since the pointers are 1 byte, (R0/R1) when they are incremented (by 2) from FE hex they will automatically be set to 0. (FE hex + 2 = 100 hex, but since it is a byte value the 1 is tossed away.) No data checking is necessary because P2 and R0/R1 are separate registers and the one does not carry to the upper address byte (P2).

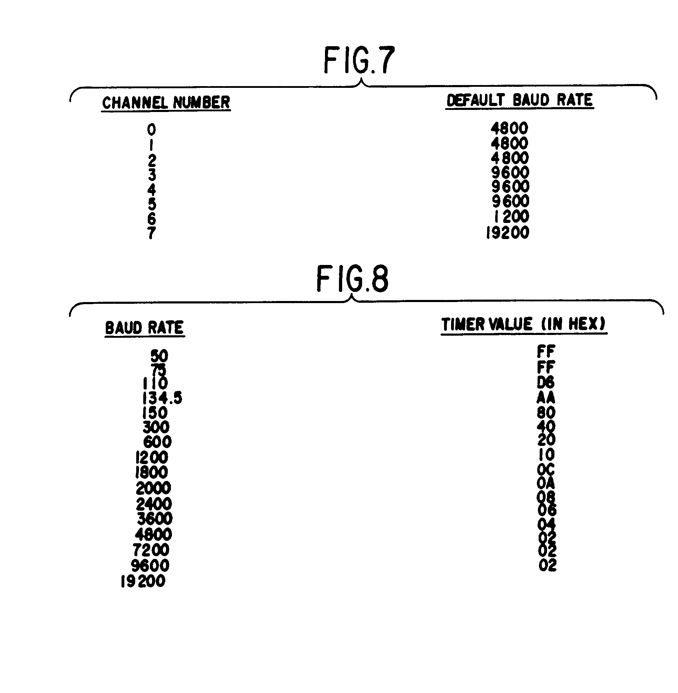

Once in operational mode, the PR box will initialize all the channels to default baud rates for the peripherals it expects to be on a specific channel. The default baud rates are set out in the table of Fig. 7. Upon this expectation, the PR box will also allocate buffer sizes to achieve maximum processing of data received from and transmitted to the respective peripherals. The buffer size is chosen to provide for storage of a maximum of 256 packets without overwriting buffer space. This comprises 128 packets in a queue ready to transmit to the host and another 128 packets in a peripheral receive queue waiting to be moved to the host transmit queue. For example, channel φ buffer is initialized to 768 bytes, (3/4 K), to accommodate a keyboard which is a single character device. Each packet stored in the buffer received from the keyboard will be comprised of three bytes: channel number, size byte, and the data byte. To store 256 packets, the buffer allocated is 256 x 3 = 768 bytes (3/4 K) long. Once communication is established between the host and the PR box, the host will then interrogate each peripheral to ascertain what type of peripheral is connected and make adjustments to the baud rate if necessary.

The main routine which the PR box runs is the background process noted above. Fig. 5C is a flowchart which describes the background process. First, in block 401, on entering this part of the firmware the function register output is turned to green.

Then, as shown by block 403 this process scans the receive and transmit queues to see if they are empty. It does this by comparing the front queue pointer to the rear queue pointer for each queue. If the front equals the rear, the queue is empty, if they are not equal, then some action must be taken. The value i used in the background routine is, of course, the channel number. In this case, i is added to the base values to get the necessary addresses for checking the front and rear pointers.

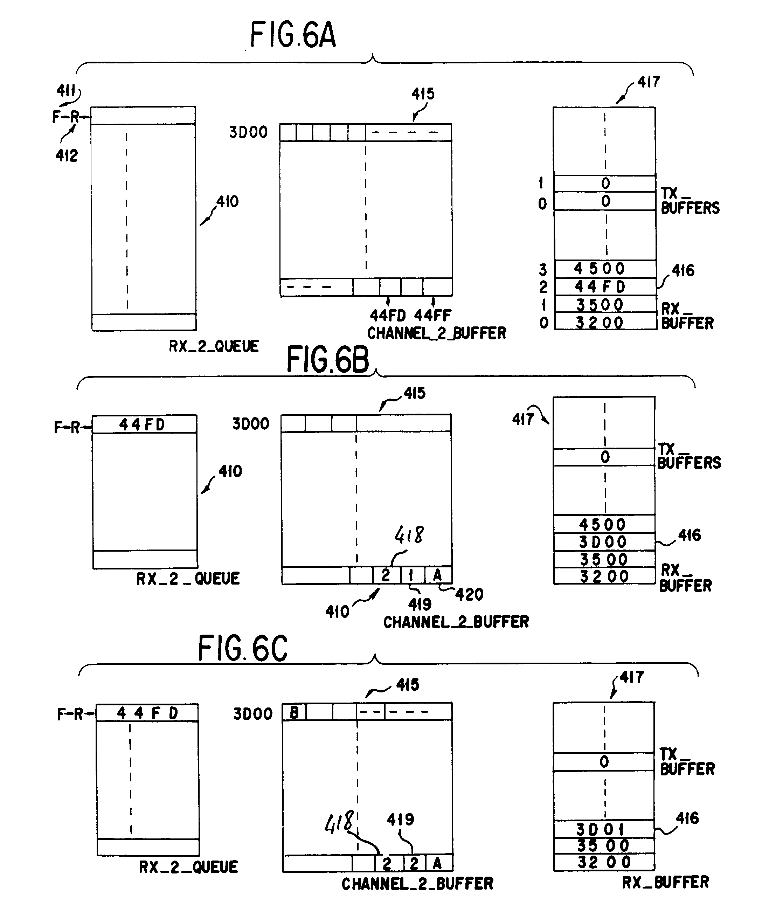

Figs. 6A-E illustrate what occurs when data is received in a receive queue from a peripheral and also illustrate the use of circular queues and circular buffers according to the present invention. Fig. 6A depicts the state the queues and buffers are in initially before a packet is received. Illustrated is the queue 410 for channel 2; the channel 2 buffer 415 and a table 417 containing pointers for the next available memory location for each of the receive channels RxO-Rx7 and transmit channels Tx0-Tx7. As noted previously, data is not moved from buffer to buffer, only the addresses are moved from queue to queue. Thus, for channel 2, buffer 2 receives the data and it is also from this buffer that data is transmitted to the host. At the start of the receive for this packet, queue 410 is empty, i.e., the front pointer 411 equals the rear pointer 412. There may have been many packets received before the front and rear pointers 410 and 411 are at the top of the receive queue 410 (Rx_2_Queue). The pointer 416 for Rx2 in table 417 is pointing to the next free buffer space in buffer 415 which is 44FD Hex.

Figure 6B depicts what occurs after the first receive interrupt on channel 2 occurs. Addresses are obtained in the manner described above by adding the channel number (2), the base addresses. A character is read, which in this example is "A" The Rx_Buffer pointer 416 address is moved into the Rx_2_Queue 410. The packet is loaded into Channel_2_Buffer 415, along with the channel number 418, the size of the packet 419, which is initialized to 1, and the character read, "A" as indicated at 420. This act causes the inter-character timer, to be explained in more detail below, for channel 2 to start.

The next free buffer space is saved in table 417 of pointer 416. The next free buffer space pointer is at 3D00 Hex. The last free buffer space pointer was at 44FF Hex which was the end location of the buffer. Instead of just bumping the free buffer space pointer to 4500 Hex and thereby going into the next SLUs data space and losing data, the free buffer space is wrapped to the start of Channel_2_Buffer. No overrun will occur because of the size of the packet and number of packets allowed as described below. This demonstrates the use of circular buffers in the PR box software.

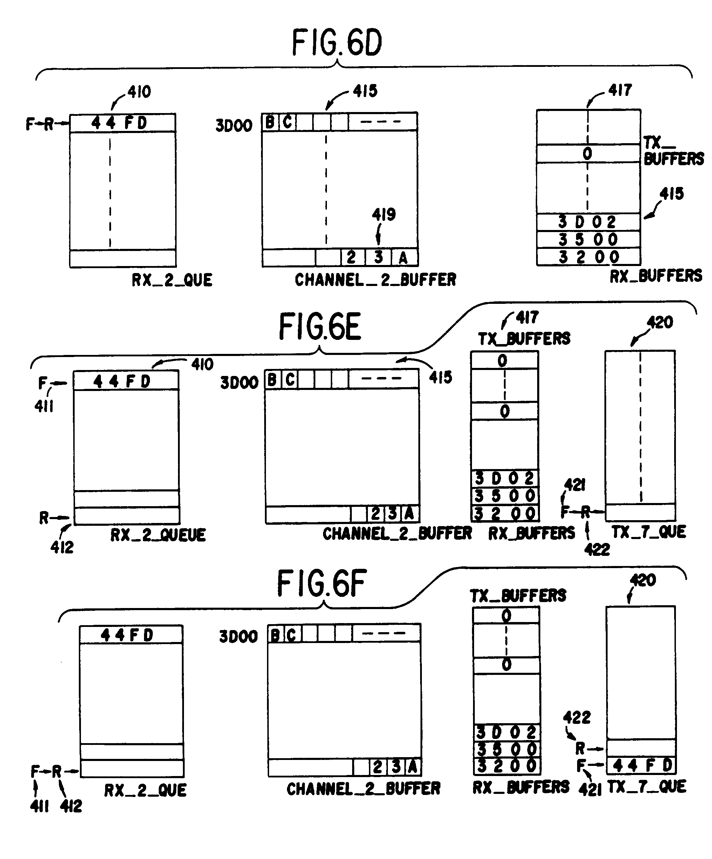

The same sequence of events as described above and depicted in Fig. 6B are repeated as shown in Fig. 6C and Fig. 6D. The character (B and C) are read and stored at the start of the channel 2 buffer 415 and the packet size 419 is incremented accordingly. Each character is moved to the address in Channel_2_Buffer 415 that pointer 416 (free buffer space pointer) of the table 417 indicates. Pointer 416 is incremented and the inter-character timer is re-started. This sequence of events continues until the inter-character timer expires.

Figs. 6A-E have been simplified to show only one packet in each queue at a time. In reality, each queue may have multiple entries and each port may be receiving/transmitting packets concurrently. Having a transmit queue, a receive queue, a buffer and associated pointers dedicated to each channel in the PR box makes this operation possible.

Fig. 6E shows that once the inter-character timer expires, the rear pointer, 412, is bumped to the next free location (FE Hex + 2 = 00). This brings the rear pointer to the start of the queue thus again demonstrating the use of circular queues in PR box software as a result of the previously explained use of the P2 and R0/R1 registers.

All received and transmitted data from the PR box is handled by interrupt routines. There are routines, which occur for example, during the steps of Figs. 6A-6E, to set up the data packets to be sent from the peripherals to the host. These packets are considered complete if the number of characters received for that peripheral equals the maximum packet size allowed, which is six bytes, or if there is a timeout of the inter-character timer for that peripheral. For example, the tablet report size is 5 bytes so after the fifth byte it will time out and be a completed packet. Inter-character timeout occurs if approximately two character times pass without reception of a byte.

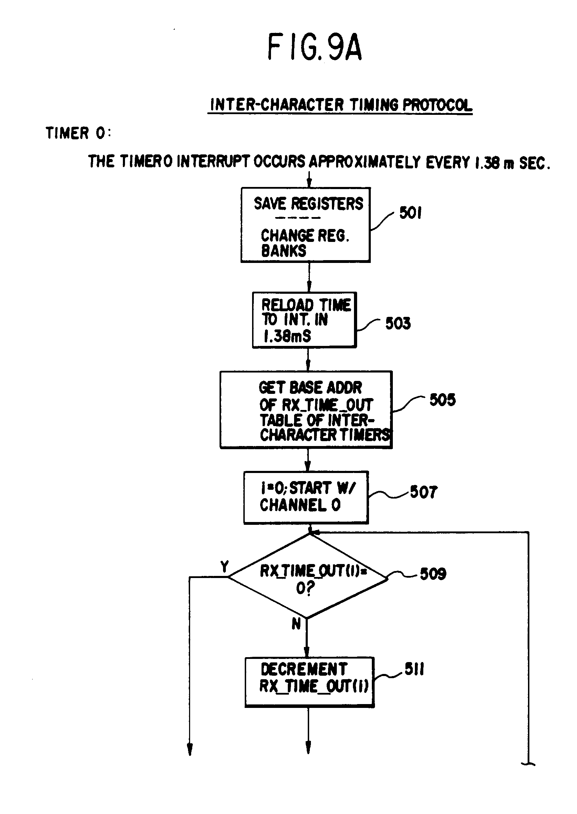

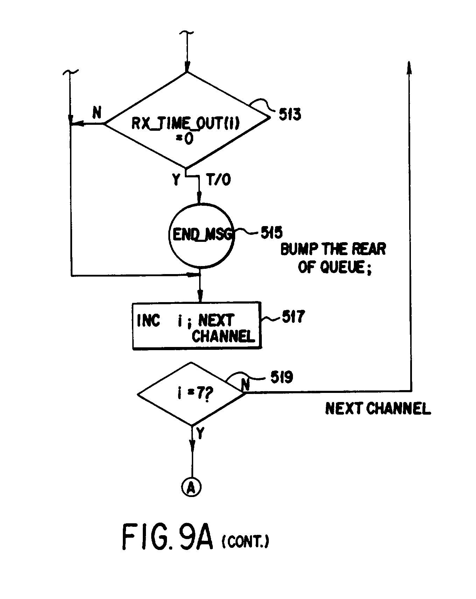

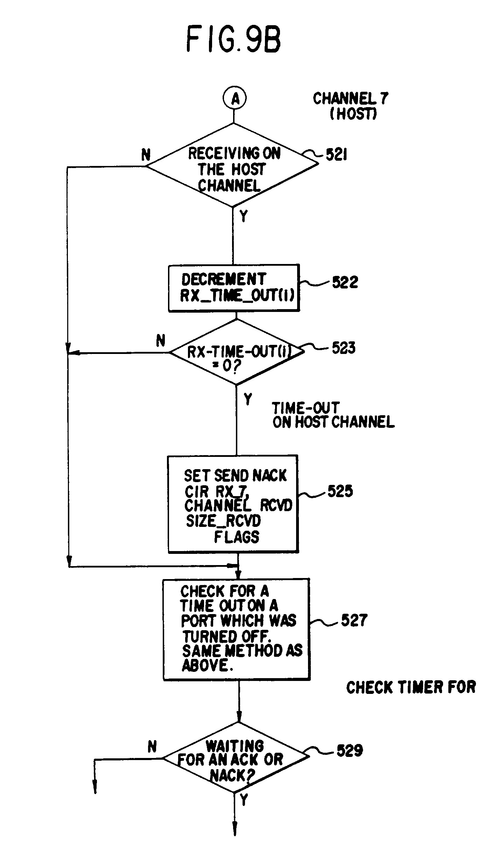

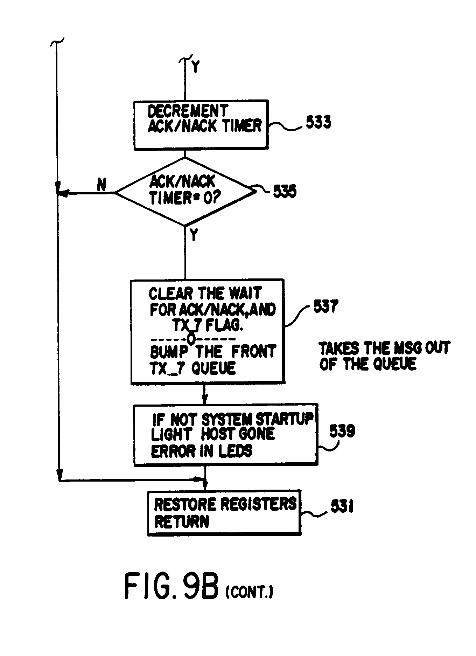

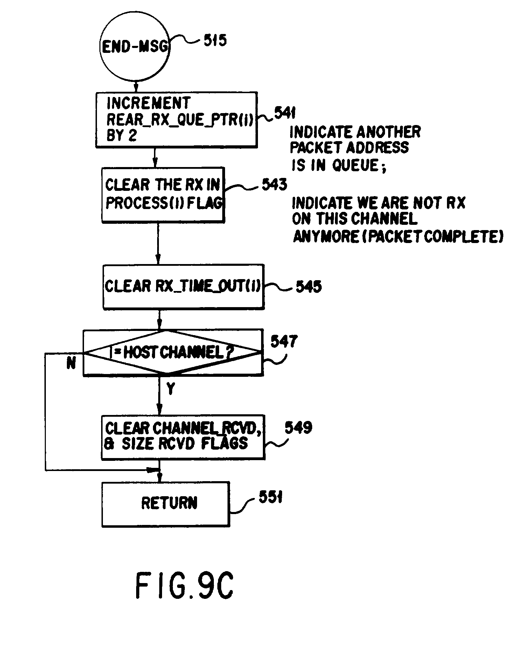

Peripheral timeout is handled by inter-character timers that are initialized before the initialization code starts. The value that is loaded into the timer is related to the baud rate. There is a timer location for each channel. Table of Fig. 8 contains a list of the timer values used for the different baud rates. The timer values are decremented in a timer 0 interrupt routine, described in detail below in connection with Fig. 9. For example, consider the case where the tablet sends a report which is 5 bytes long at 4800 baud. At 4800 baud and 11 bits per character, it will take approximately 2.3 msecs per character for transmission. Then in the case of this report being sent, the timer would expire after about 5 msec and the buffer would be marked as complete.

As disclosed above in connection with Fig. 6B, when the first character is received on ports 0 - 6 (peripheral ports), the address of the first free space in that ports' buffer 415 is stored in the queue 410. The current port number is stored in that location at 418. The next buffer location 419 is the size, and will be initialized to 1. Finally, the character which was read in e.g. A, is stored in the buffer. Subsequent bytes are be stored in the buffer 415, and the size byte 419 is incremented.

Thus, after each byte is read, a timer for that port is initialized to approximately twice the transmit time for a single character. This inter-character timer value is adjusted if the host changes the baud rate on any channel. The packet is closed, and the ith rear pointer 412 of Fig. 6A-E is bumped by 2 when the timer counts to zero (times out), or the size equals 6, where i is the channel number, as shown in Fig. 6E.

After the background process sees a non-empty Rx queue, e.g. as in Fig. 6E the buffer address at the front 411 of the receive queue is moved to the rear 422 of the Tx_7_Que (host) 420. The front receiver pointer 411 of the Rx queue is bumped to the next location (which may or may not have any more data buffers to send), and the rear 422 of the Tx_7_Que is bumped to the next free location. This is shown in Fig. 6F.

In general, the transmitter is turned on for port 7, if it is not already on, if an ACK/NACK or a Keep Alive needs to be sent, or the queue is not empty. If the command queue is not empty, then the command parser is executed. Transmitter interrupts turn themselves off when the last character is sent. The background routine, transmit, receive, and time interrupts all run asynchronously to each other.

Thus, if the receive queue is not empty and the queue is for port 0 - 6 or the command queue, then the queue entry at the front of that queue is pushed onto the rear 422 of the transmit queue 420 for port 7. The front 411 of the receive queue at which the entry was just taken off is incremented by two as explained above in connection with Fig. 6F. What has just been described is how information is received from a peripheral into a buffer and the buffer locations stored in a receive (Rx) queue and then transferred to the Tx_7_Que to be transmitted to the host.

Packets from the host for the peripherals (0-6) or the PR box (the command channel) are handled in similar fashion, first with the locations stored in the Rx_7_Que and then being transferred to a respective Tx_Que.

If the receive queue for port 7, Rx_7_Que (the host) is not empty, then the first byte of the buffer (at the queue entry) contains the port where the entry should be directed. That port value is used to select the appropriate transmit queue, and the buffer address+1 is the value which is pushed onto that transmit queue. If the destination is for port 7 (i.e., a command to the PR Box), then this is pushed onto the command queue.

The first character received on port 7 must be an ACK, NACK, or an SOH. If it is an SOH, the PR Box will expect to receive a packet. All following characters are stored in the channel 7 buffer. After the last data character is read, the received checksum is compared with the calculated checksum. If they are equal, an ACK is sent to the host, and the rear pointer for channel 7 is bumped by 2. If the checksum does not match, or the inter-character timer expires (10 msec for the host), a NACK is sent to the host, and the rear pointer for channel 7 is not incremented (The PR Box ignores the data it stored).

Once an entry is pushed onto a transmit queue for ports 0-6 and it is not empty, the transmitter interrupt is turned on for this channel, if it is not already on.

A transmit interrupt on ports 0 - 6 will take the address at the ith transmitter queue front pointer for the buffer to transmit. The first byte is the size, which is not transmitted, but the subsequent bytes are transmitted until the size is zero. When the interrupt is finished transmitting all the data bytes, the front pointer for the ith transmitter is bumped by two, and the interrupt for that port is turned off.

A transmit interrupt on port 7 could be for a few reasons such as, to send an ACK, NACK, or a packet to the host. A transmit interrupt on port 7 (Host port) will reinitialize the keep alive timer to 10 seconds.

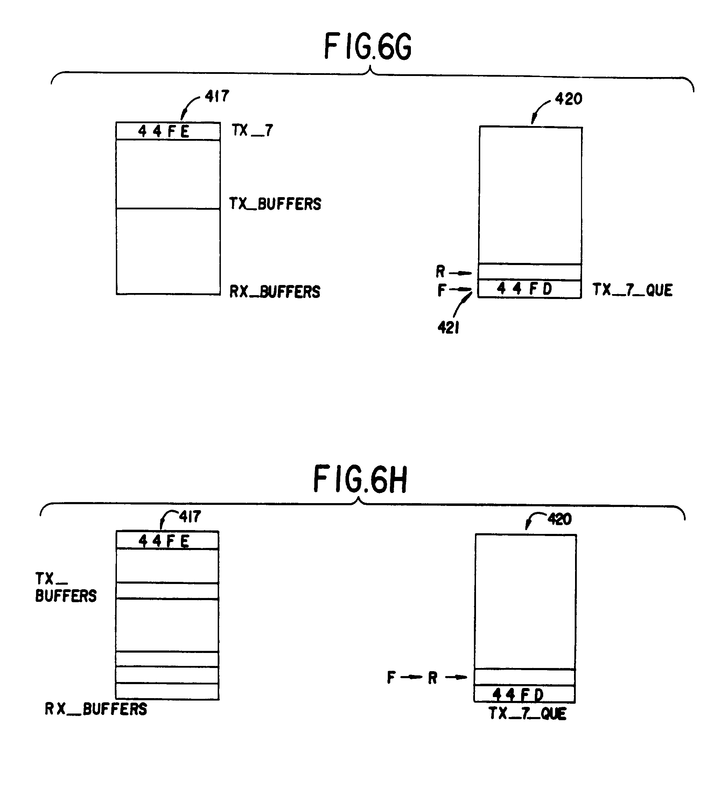

If the PR box is to send a packet to the host, the first time in the interrupt, it will send an SOH. The second time in the interrupt routine it will get the packet address pointed to by the front pointer 421 for the channel 7 transmitter queue 420 as shown in Fig. 6G. The first byte at that address will be the channel which the packet is from. The PR box takes this byte, sends it and stores the address of the next byte to send in Tx_Buffers table 417 at the location for channel 7. For example, Fig. 6G illustrates transmitting the information for channel 2 which was obtained as shown in Figs. 6A-E. The next time in, it will send the size of the packet, and use the size to send the subsequent data bytes, until the size is zero. As each byte is sent, the Tx buffer (7) is incremented to point to the next byte. As each byte is sent, it is also calculated into the checksum, and the checksum is then sent when the size is zero. After the checksum is sent, a timer is initialized to 20mSec in order to wait for an ACK or a NACK, and the interrupt is turned off. If an ACK is received, the front pointer for channel 7 will be bumped by two as shown in Fig. 6H. If the timer expires, this pointer will be bumped by two, and the LEDs will have the error code to indicate the host did not respond. Another packet cannot be sent to the host until an ACK/NACK is received, or the timer expires.

As noted above, the host sends data to a physical channel address. The host keeps a table indicating which device is plugged into a particular channel. The host can tell which device is on a particular channel by requesting the device to send a self-test report. This is done for devices having common connectors that can be interchanged (i.e., the mouse and tablet, dial box and digit box, etc.). The PR box tries to determine if a device is connected to a channel by looking for the device present bit. The mouse, tablet, buttons box, dial box, and spare keyboard channels have device present bits. By using these, the PR box can tell that there is a device out there, but not what device it is.

When the PR box sends the self-test report, one byte is the current configuration of the system (only those devices that have a device present bit). There is no attempt made to try to identify if there is a device on the spare channel, host channel, or the keyboard channel.

A receive interrupt will occur on channels 1 - 4 and 6 if a device is plugged/unplugged. If this occurs, a message is sent to the host. The host then interrogates that port to see which peripheral, if any, is present and records that information in a table. It then sets baud rates by sending a command to the peripheral and then a command to the PR box to set the UART baud rate for the port in question. Baud rates may be reset at other times by the host to, for example, slow down transmission of a data where excessive transmission errors are encountered.

The Timer 0 interrupt contains the counters for the inter-character timers, counters for a port which was previously turned off, and the ACK/NACK counter. Fig. 9 is a flow diagram illustrating the Timer 0.

As indicated by Fig. 9, the timer interrupt occurs approximately every 1.38 msec. Upon the occurrence of an interrupt, as indicated by block 501, registers are saved and the register banks changed. The time to the next interrupt is then loaded as 1.38 msec. as indicated by block 503. The next step is to get the base address of the receiver timeout table of intercharacter timers. This table contains the same information which is contained in Figs. 7 and 8 hereof, i.e. for each channel it gives the value for the intercharacter timing. The next block indicates that the process starts with i equal to 0. In other words, as block 507 indicates, it starts with channel 0. A decision block 509 is entered in which, the first time through, a check is made to see if the timeout for receiver i is equal to 0. If it is not equal to 0, block 511 is entered and the timeout is decremented by 1. A check is made again in decision block 513 to see if timeout has reached 0. If the answer is yes then it is the end of the message as indicated by block 515 and, as indicated above, the rear of queue i is bumped. In decision block 509 if timeout is equal to 0 this means there is nothing to be done for this channel. If the answer in decision block 513 is no, this means that timeout has not occurred. In either case, block 517 is entered and i is incremented to the next channel. Following this a decision block 519 is entered to see if i is equal to 7. If not, the program loops back by a loop 520 to decision block 509 to check timeout for the next channel. When channel 7 is reached, as indicated by a yes answer from block 519, decision block 521 is entered. Here a check is made to find out if the PR box is receiving on the host channel. If it is, according to block 521 timeout is decremented by 1. Then in block 523 a check is made to see if timeout is equal to 0. If it is, there is a timeout on the host channel and a number of steps are taken as indicated in block 525. If timeout has not occurred, the program proceeds directly to block 527. As indicated therein, a check is then made for a timeout on a port which was turned off. This is done using the same series of steps just described.

After passing through block 527, a decision block is entered to see whether or not the PR box is waiting for an ACK or NACK. If the answer in decision block 529 is no, block 531 is entered immediately which indicates that the registers are restored and a return from the interrupt to the main program. If the PR box is waiting then block 533 is entered and the ACK/NACK timer is decremented. Next, a check is made in block 535 to see if the timer is at 0. If it is not, block 531 is entered. Otherwise, if it is 0, the wait for ACK/NACK and the transmitter 7 flag is cleared and the front pointer for the transmitter 7 queue is bumped as indicated by block 537. Next, block 539 is entered and if it is not system start up the host gone error is lighted in the LEDs 52 of Fig. 2. After this, block 531 is again entered. As shown in Fig. 9C, when end message 515 is encountered, as shown by block 541, the rear pointer for the receiver associated with the ith channel for which the message had ended is incremented by 2. Next, as indicated by block 543, the receive in progress flag is cleared followed by clearing of the receive timeout as indicated by block 545. Next, a check is made in decision block 547 to see if i is equal to the host channel. If it is, the actions taken in block 549 are carried out. When this done, or if the answer in block 547 was no, then the program returns to block 517 of Fig. 9A. (END_MSG is used elsewhere in the firmware also.)

A timer is only decremented if it is non-zero. If it is non-zero, and transitions to zero, some action is taken. If an inter-character timer expires, then the rear pointer 412 for the ith receiver is bumped by two. If a timer for a port which was previously off expires, then that port is turned on. A port is turned off when it gets too much data, and overflows its queue. The port is then turned off for 10mSec. If the ACK/NACK timer expires, then the front pointer 421 for channel 7 transmitter is bumped by two, and the error for the host not responding is placed in the LEDs 57.

The Timer 1 interrupt contains the counter for the "keep alive" timer. It is decremented by 1 on each entry. If it transitions to zero, a flag is set so the background process of Fig. 5C will send a "keep alive" message to the host.

The interrupt routines to receive packets from the host, thus, set them up in memory for the background process of Fig. 5C to decipher. This background process also sets up the process for the interrupt routines to send data packets to the host and the peripherals.

### Packet Definition

As noted above, bytes received by the PR box from a peripheral are grouped into a packet to be sent to the host. The packet definition is as follows:

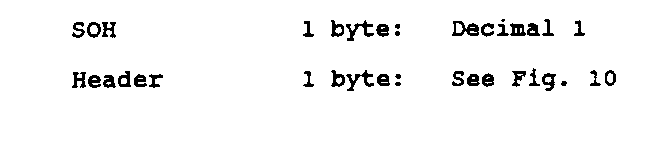

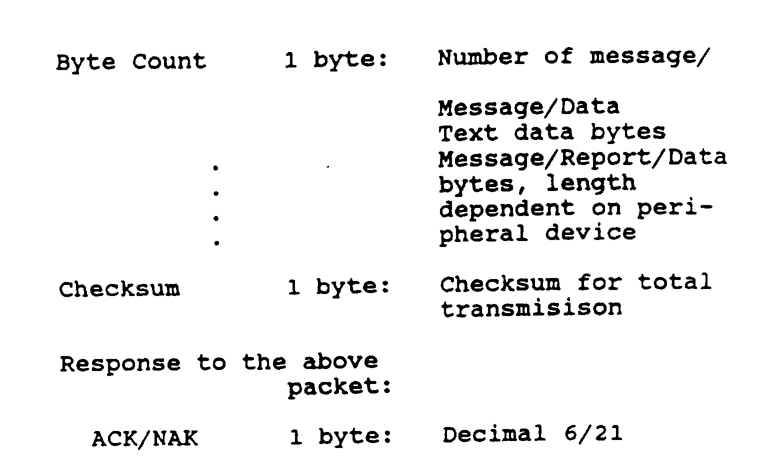

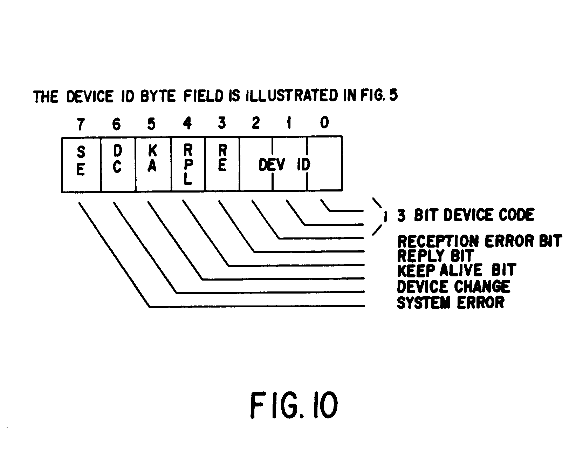

The header byte field is illustrated in Fig. 10.

The three bit device code utilizes all available bits. There are device codes for the keyboard, mouse, tablet, dial box, button box, PR box system and two spare ports. The host channel is considered to be part of the PR box sytem, i.e. the host channel uses a DEV ID of 111.

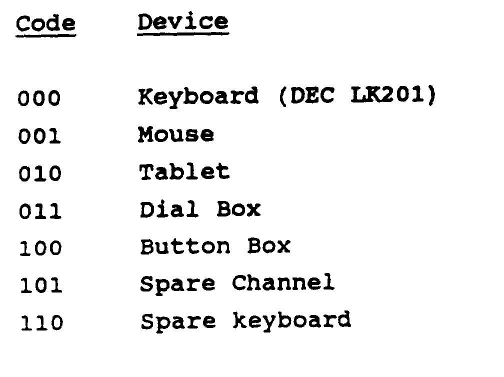

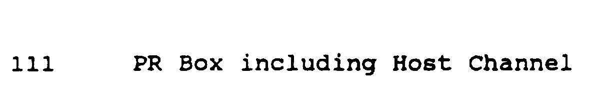

The reception error bit of Fig. 10 is used to indicate a problem with the associated device identified by the device code. This bit will be set when the PR box sees a parity, framing, or hardware overrun error on the UART associated with the device.

Reception Error Bit = logical 1 to indicate an error has occured.

The Reply bit is used to indicate the host that the PR box is responding to a request made by the host and that the report or data following is not being originated by the PR box or peripheral device. This bit is used for a response to the commands T and R discussed below under Self Test Command and Status Report Command, respectively.

Reply Bit = logical 1 to indicate this is a response to a previous request from the host. Used only for PR box commands.

The Keep Alive bit is used to send null transmissions to the host within a specified time (e.g. 10 seconds) if there has been no transaction in that time period. The host watchdog timer is set to 10 seconds. This functionality tells the host that the PR box is still connected but has not data to transmit. The host resets its watchdog timer and starts the cycle again.

Keep Alive - logical 1 to indicate keep alive function only.

The Device Change bit is set to indicate that a device with a device present bit has been connected/disconnected to/from the PR box. When this bit is set, the packet contains one message byte. This is the configuration byte. The configuration byte will have one bit set for every device that has a device present pin that is plugged into the system.

Device Change Bit - logical 1 to indicate a device has changed state.

The System Error bit is used to send error reports to the host. When this bit is set, there is one data byte in the packet. That data byte is the error code. The error codes that currently exist are:
1. 01H - Bad command sent from host.
2. 02H Device Queue has had an overflow.

Two methods of error detection are utilized:
1. Checksum for the transmission (add with carry)
2. Odd parity for each byte.

If the Keep Alive bit is set, the Reply bit and Error bit are ignored by the host. The DEV ID with Keep Alive must be the PR box device.

### The Transmission Protocol

The transmission protocol is as follows:

The originating device sends its data and waits for an ACK (all OK) or a NAK (something doesn't track, retransmit). Status information is a little bit different, in that the originating device, host will be expecting something other than the ASCII ACK/NAK character back. This is where the Reply bit is used.

If a NAK is received by either the PR box or the host, the source device will retransmit the previous transmission. The device which sent the NAK will flush the previous transmission and respond to the re-transmission as a new request.

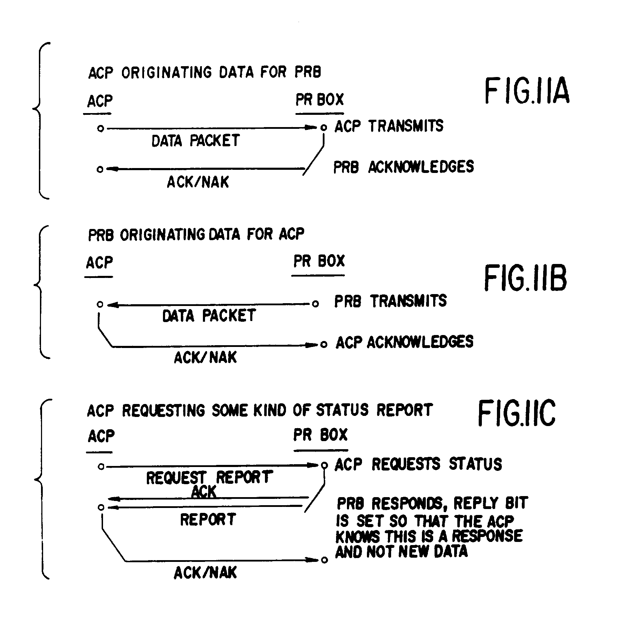

Illustrative diagrams are shown in Fig. 11A-C which respectively show host originated data; PR box originated data and a report request by the host.

When a self-test command is transmitted directly to a peripheral, i.e. as regular data, the response coming back will be handled the same way, i.e. as data, and the Reply bit will not be set and the DEV ID will be that of the peripheral device. The PR box has no special commands to individually test individual peripherals.

When a device overrun error occurs, data may be lost. When the PR box gets an overrun error, and continues to receive data from that device before it can empty out it's queue, the receive for that device is turned off for 10 mSec.

After 10 mSec., the receive is turned on again, and the data that comes in is placed in the queue to send to the host. During the 10 mSec. that receive is off, data is lost.

Data from a peripheral is limited by the PR box to a maximum of six bytes per packet. If a peripheral sends out more than six consecutive data bytes without any null time period between the bytes, the PR box will make separate packets with a maximum of six data bytes. The packets from the host to the PR box do not have a data limit check. However, the host should limit the data size in a packet to nine data bytes for safety. The PR box can safely store up to 256 packets of nine data bytes, and warn the host on a queue overflow condition. If the host sends larger packets, it should send them less frequently, i.e. 128 packets of 18 data bytes, etc., with a bigger time gap between packets.

As explained above, packeting of data from devices is handled by timers. When the PR box "sees" a "null" time period equal to two times the character length of a peripheral, the packet is closed off and placed in the queue to send to the host. (See the example above.) There is also a default for a transmission from the host of 10 mSec. null time in between two bytes of a packet. If this timer expires a NAK will be sent to the host. If the default speed of the host is changed, the timer will revert to a time period of two times the character length.

As previously described, there are also timers for the Keep Alive (about 10 SEC) and ACK/NAK (about 20 mSec)

### Commands to the PR Box

Self-Test Command
T - Test PR System and send the self-test report (including the configuration).
Note: Test T will temporarily disconnect the PR Box from the host for less than 10 seconds.

### Status Report Command

R - Report status of PR System, including Peripherals configuraiton.

### Change Baud Rate Command (two forms)

0 Cnx - where "n" is the channel number (0 keyboard...7-PR-Host link), and "x" is the baud rate.
0 Cnxyz - where "n" is the spare channel (5), "x" is the baud rate, "y" is the parity (ASCII O (Hex 4F) - for odd, ASCII E (Hex 45) - for even, or ASCII N (Hex 4E) - for none), and "z" is the bits/char (Hex 5, 6, 7, or 8)/.
Note: The Parity and Bits/char can only be changed on the spare port, however, the baud rate on the spare channel can be changed without changing the parity and bits/char. The other ports can only have the baud rate changed.

The following is the table of baud rates (x):

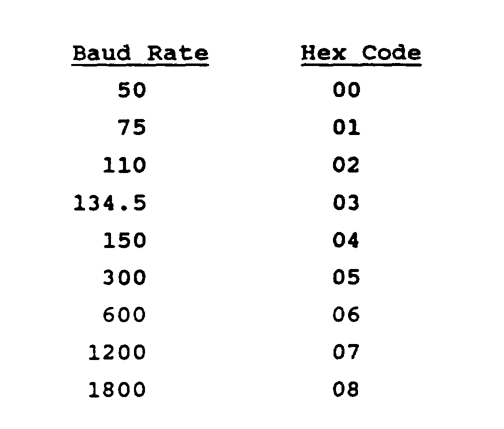

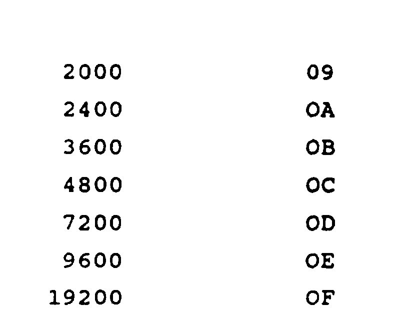

### Light LED Command

Lx - where "x" is the bit pattern that will be displayed in the Diagnostic register LEDs (bit 0 is least significant bit).
Note: Only bits 0-6 can be changed by the user. Bit 7 is changed by the PR Box only. This bit should only be used for error display. Though bit 6 can be changed by the user, caution should be exercised since this bit is intended to indicate a system level error.

### LED Displays

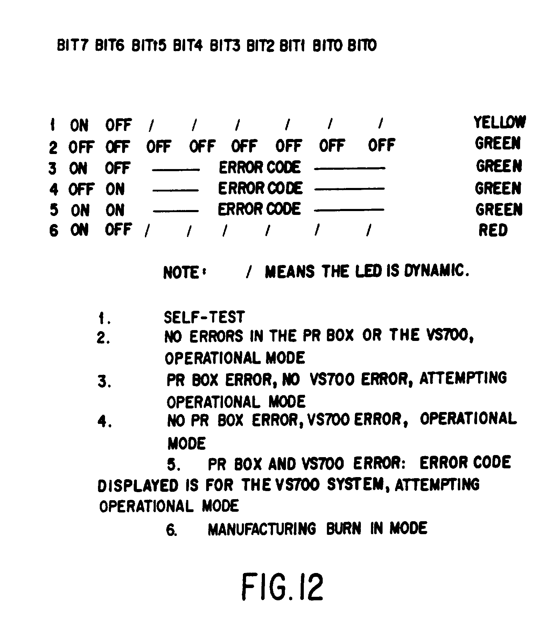

Fig. 12 illustrates what the LED registers will looks like during the various stages that the PR Box goes through on power up. Six scenarios are presented.

### Diagnostic Report Format

The diagnostic report will look as follows:
1 17 4 X X Y Z Checksum
Where 1 is SOH, 17 Hex is the device ID for the PR Box with the reply bit set, 4 is the number of data bytes, the X's are error codes or zero (for no errors), the Y is the configuration byte, and the Z is the Firmware Revision.

### Diagnostic Error Codes

Definitions for the PR Box error codes written to the LEDs with the function LED RED.
0 081H-Error encountered in the 8031
0 083H-Error in the diagnostic register
0 083H-Error in the function register
0 084H-Error in the external RAM
0 085H-Error in the checksum of the ROM
0 086H-Received an unsolicited interrupt
0 088H-088FH-Error generating or receiving an interrupt
0 090H-097H-Error in the DC349 registers
0 098H-09FH-Error in the local loopback of the DC349
0 0A0H-OA7H-Error in the external loopback for the DC349
0 0A8H-OAFH-Error in the DSR or DCD pins of the DC 349

If the communications link between the host and the PR Box is bad, the PR Box will report a code of:
0 040H-Reported in operational mode if the host did not ACK/NAK a packet in the appropriate amount of time. (Not including Bit 7)

## Claims

1. A repeater (21) in a system which includes a data transmitting device, said repeater (21), and a data receiving device, the repeater accumulating input data in packets from said transmitting device and retransmitting said packets of data to said receiving device, said repeater being characterized by having a memory structure for storing said data in said repeater comprising:
(a) a data buffer (415);
(b) a receive queue (410) having a plurality of entries, each entry capable of storing a starting address for the packets of data in said data buffer received from said transmitting device;
(c) a transmit queue (420) having a plurality of entries, each of which storing the starting addresses of packets of data to be transmitted to said receiving device; and
(d) means (41) to transfer said addresses from said receive queue to said transmit queue, each of said buffer and said queues being circular means for retransmitting said packets of data to said receiving device.

2. A repeater according to claim 1 wherein each queue entry has an address with an upper queue part and a lower queue part and the number of entries in said queue parts change from a maximum value to zero when an increment is added to the last of said plurality of entries of said queue to generate a carry and wherein said repeater includes pointers (412, 411) for pointing to addresses in said queues and further including means (41) for generating pointers comprising a first register for storing an upper address and a second register for storing a lower address, the carry from said second register is not coupled to said first register whereby when said maximum value is exceeded in the second register the address will go back to its beginning value in a circular manner.

3. A repeater according to claim 2, wherein said repeater is connected to a plurality of transmitting devices in said system and wherein, a buffer and a receive queue is associated with each of said transmitting devices, said means (41) to transfer transfers addresses from each of said receive queues associated with each of said transmitting devices to said transmit queue when data is received and further comprises means for establishing a base receive queue address and means for adding to said base receive queue address a number associated with each transmitting device to define the upper address of the receive queue for the associated transmitting device.

4. A repeater according to claim 3, wherein said repeater further includes means (62) for sensing receipt of data from any of said transmitting devices, said means (62) including a register for storing the number of the transmitting device from which said data is coming.

5. A repeater according to claim 4 wherein said repeater includes receiver/transmitters (SLU) for each of said peripherals and said host.

6. A repeater according to claim 5 wherein said repeater includes a processor (41) and said means (62) for sensing include means to generate an interrupt to said processor.

7. A repeater according to claim 4 wherein said queue addresses include a front pointer (F) address indicating the first entry and a rear pointer (R) indicating the next free space for an entry, and means for incrementing said rear pointer each time a new entry is made and for incrementing said front pointer each time a buffer address is transferred from one queue to another.

8. A repeater according to claim 7 wherein said repeater further includes a table (417) having a receive entry for each of said data buffers and a transmit entry for each of said data buffers, the receive entry storing the address of the next free location in said data buffer into which received data can be stored and the transmit entry storing the address of the next byte of data from said data buffer to be transmitted.

9. A method of communicating between a data transmitting device and a data receiving device in a system which includes said data transmitting device, a repeater (21), and said data receiving device, said method being characterized by comprising the steps of:
(a) accumulating input data in packets from said transmitting device at said repeater (21) in a data buffer (415);
(b) entering into a receive queue (410) having a plurality of entries, the starting address of each packet of data in said data buffer (410) received from said transmitting device;
(c) transferring said starting addresses from said receive queue to a transmit queue (420) having a plurality of entries, each of which storing the starting address of a packet of data to be transmitted to said receiving device each of said buffer and said queues being circular; and
(d) retransmitting said packets of data to said receiving device.

10. The method according to claim 9 wherein each queue entry has an address with an upper queue part and a lower queue part and the number of entries in said queue parts change from a maximum value to zero when an increment is added to the last of said plurality of entries of said queue to generate a carry and wherein pointers (411, 412) for pointing to addresses in said queues are provided and further including generating said pointers by storing said upper address in a first register, storing said lower address in a second register, the carry from said second register is not coupled to said first register whereby when said maximum value is exceeded in the second register the address will go back to its beginning value in a circular manner.

11. The method according to claim 10 wherein a plurality of transmitting devices are provided and further including associating a buffer and a receive queue with each of said transmitting devices, transferring addresses from each of said receive queues to said transmit queue when data is received, establishing a base receive queue address and adding to said base receive queue address a number associated with each transmitting device to define the upper address of the receive queue for that transmitting device.

12. The method according to claim 11 further including sensing receipt (62) of data from any of said transmitting devices and storing the number of the transmitting devices from which said data is coming.

13. A method according to claim 12 wherein said data receiving device includes means to transmit data to said transmitting devices through said repeater and said transmitting devices include means for receiving data and further including associating a receive queue with said receiving device and a transmit queue with each of said transmitting devices.

14. The method according to claim 13 wherein said receiving device comprises a host and said transmitting devices comprising peripherals (23-35) providing data input to said host (19).

15. The method according to claim 14 wherein said repeater includes a processor and further including generating an interrupt to said processor when sensing receipt of data.

16. The method according to claim 13 wherein said queue addresses include a front pointer address indicating the first entry and a rear pointer address indicating the next free space for an entry, and further including incrementing said rear pointer each time a new entry is made and incrementing said front pointer each time a buffer address is transferred from one queue to another.

17. The method according to claim 16 and further including storing in a table a receive entry for each of said buffers and a transmit entry for each of said buffers, the receive entry storing the address of the next free location in said buffer into which received data can be stored and the transmit entry storing the address of the next byte of data from said buffer to be transmitted.

18. A system which includes a data transmitting device and a data receiving device wherein said system further includes a repeater according to one of claims 1 to 8.

19. A system according to claim 18 wherein said data receiving device includes means to transmit data to said transmitting devices through said repeater and said transmitting devices include means for receiving data and further includes a receive queue associated with receiving device and a transmit queue associated with each of said transmitting devices.

20. A system according to claim 19 wherein said receiving device comprises a host (19) and said transmitting devices comprise peripherals (23-35) providing data input to said host (19).

## Patentansprüche

1. Zwischenverstärker (21) in einem System, das eine Datensendevorrichtung, den Zwischenverstärker (21) und eine Datenempfangsvorrichtung enthält, wobei der Zwischenverstärker Eingangsdaten in Paketen von der Sendevorrichtung akkumuliert und die Datenpakete an die Empfangsvorrichtung weitersendet, wobei der Zwischenverstärker dadurch gekennzeichnet ist, daß er eine Speicherstruktur zum Speichern der Daten im Zwischenverstärker besitzt, mit:
(a) einem Datenpuffer (415);
(b) einer Empfangswarteschlange (410), die mehrere Einträge besitzt, wobei jeder Eintrag eine Startadresse im Datenpuffer der Datenpakete, die von der Sendevorrichtung empfangen werden, speichern kann;
(c) einer Sendewarteschlange (420), die mehrere Einträge besitzt, wovon jeder die Startadressen von an die Empfangsvorrichtung zu sendenden Datenpaketen speichert;
(d) einer Einrichtung (41) zum Übertragen der Adressen von der Empfangswarteschlange an die Sendewarteschlange, wobei sowohl der Puffer als auch die beiden Warteschlangen zirkuläre Einrichtungen sind, um die Datenpakete an die Empfangsvorrichtung weiterzusenden.

2. Zwischenverstärker nach Anspruch 1, wobei jeder Warteschlangeneintrag eine Adresse mit einem oberen Warteschlangenteil und einem unteren Warteschlangenteil besitzt und die Anzahl von Einträgen in den Warteschlangenteilen sich von einem Maximalwert nach null ändert, wenn zum letzten der mehreren Einträge der Warteschlange ein Inkrement hinzugefügt wird, um einen Übertrag zu erzeugen, und wobei der Zwischenverstärker Zeiger (412, 411) zum Zeigen auf Adressen in den Warteschlangen und ferner eine Einrichtung (41) zum Erzeugen von Zeigern enthält, die ein erstes Register zum Speichern einer oberen Adresse und ein zweites Register zum Speichern einer unteren Andresse enthält, wobei der Übertrag vom zweiten Register nicht an das erste Register gekoppelt ist, wobei die Adresse dann, wenn der Maximalwert im zweiten Register überschritten wird, zu ihrem Anfangswert in zirkulärer Weise zurückkehrt.

3. Zwischenverstärker nach Anspruch 2, wobei der Zwischenverstärker an mehrere Sendevorrichtungen in dem System angeschlossen ist und wobei jeder der Sendevorrichtungen ein Puffer und eine Empfangswarteschlange zugeordnet sind und die Übertragungseinrichtung (41) Adressen von jeder der den einzelnen Sendevorrichtungen zugeordneten Emfangswarteschlangen an die Sendewarteschlange überträgt, wenn Daten empfangen werden, ferner mit einer Einrichtung zum Herstellen einer Basis-Empfangswarteschlangenadresse und einer Einrichtung zum Addieren einer jeder Sendevorrichtung zugeordneten Nummer zur Basis-Empfangswarteschlangenadresse, um die obere Adresse der Empfangswarteschlange für die zugeordnete Sendevorrichtung zu definieren.

4. Zwischenverstärker nach Anspruch 3, wobei der Zwischenverstärker ferner eine Einrichtung (62) zum Erfassen des Empfangs von Daten von irgendeiner der Sendevorrichtungen enthält, wobei die Einrichtung (62) ein Register zum Speichern der Nummer der Sendevorrichtung, von der die Daten kommen, enthält.

5. Zwischenverstärker nach Anspruch 4, wobei der Zwischenverstärker für jedes der Peripheriegeräte und den Host Empfänger/Sender (SLU) enthält.

6. Zwischenverstärker nach Anspruch 5, wobei der Zwischenverstärker einen Prozessor (41) enthält und die Erfassungseinrichtungen (62) eine Einrichtung für die Erzeugung einer Unterbrechung für den Prozessor enthalten.

7. Zwischenverstärker nach Anspruch 4, wobei die Warteschlangenadressen eine vordere Zeigeradresse (F), die den ersten Eintrag angibt, und einen hinteren Zeiger (R), der den nächsten freien Raum für einen Eintrag angibt, enthalten, ferner mit Mitteln, die den hinteren Zeiger jedesmal inkrementieren, wenn ein neuer Eintrag erfolgt, und den vorderen Zeiger jedesmal inkrementieren, wenn eine Pufferadresse von einer Warteschlange zu einer weiteren übertragen wird.

8. Zwischenverstärker nach Anspruch 7, wobei der Zwischenverstärker ferner eine Tabelle (417) mit einem Empfangseintrag für jeden der Datenpuffer und einem Sendeeintrag für jeden der Datenpuffer enthält, wobei der Empfangseintrag die Adresse der nächsten freien Stelle im Datenpuffer, an der empfangene Daten gespeichert werden können, speichert und der Sendeeintrag die Adresse des nächsten zu sendenden Datenbytes vom Datenpuffer speichert.

9. Verfahren für die Kommunikation zwischen einer Datensendevorrichtung und einer Datenempfangsvorrichtung in einem System, das die Datensendevorrichtung, einen Zwischenverstärker (21) und die Datenempfangsvorrichtung enthält, wobei das Verfahren dadurch gekennzeichnet ist, daß es die folgenden Schritte enthält:
(a) Akkumulieren von Eingangsdaten in Paketen von der Sendevorrichtung beim Zwischenverstärker (21) in einem Datenpuffer (415);
(b) Eingeben der Startadresse im Datenpuffer (410) jedes der Datenpakete, die von der Sendevorrichtung empfangen werden, in eine Empfangswarteschlange (410) mit mehreren Einträgen;
(c) Übertragen der Startadresse von der Empfangswarteschlange an eine Sendewarteschlange (420) mit mehreren Einträgen, wovon jeder die Startadresse eines an die Empfangsvorrichtung zu sendenden Datenpakets speichert, wobei sowohl der Puffer als auch die Warteschlangen zirkulär sind; und
(d) Weitersenden der Datenpakete an die Empfangsvorrichtung.

10. Verfahren nach Anspruch 9, wobei jeder Warteschlangeneintrag eine Adresse mit einem oberen Warteschlangenteil und einem unteren Warteschlangenteil besitzt und die Anzahl der Einträge in den Warteschlangenteilen sich von einem Maximalwert nach null ändert, wenn zu dem letzten der mehreren Einträge der Warteschlange ein Inkrement hinzugefügt wird, um einen Übertrag zu erzeugen, und wobei Zeiger (411, 412) zum Zeigen auf Adressen in den Warteschlangen vorgesehen sind, ferner mit dem Schritt des Erzeugens der Zeiger durch Speichern der oberen Adresse in einem ersten Register und durch Speichern der unteren Adresse in einem zweiten Register, wobei der Übertrag vom zweiten Register nicht an das erste Register gekoppelt ist, wobei die Adresse dann, wenn der Maximalwert im zweiten Register überschritten wird, zu ihrem Anfangswert in zirkulärer Weise zurückkehrt.

11. Verfahren nach Anspruch 10, wobei mehrere Sendevorrichtungen vorgesehen sind, ferner mit den Schritten des Zuordnens eines Puffer und einer Warteschlange an jede der Sendevorrichtungen, des Übertragens von Adressen von jeder der Warteschlangen an die Sendewarteschlange, wenn Daten empfangen werden, des Herstellens einer Basis-Empfangswarteschlangenadresse und des Addierens einer jeder Sendevorrichtung zugeordneten Nummer zur Basis-Emfpangswarteschlangenadresse, um die obere Adresse der Empfangswarteschlange für diese Sendevorrichtung zu definieren.

12. Verfahren nach Anspruch 11, ferner mit dem Schritt des Erfassens des Empfangs (62) von Daten von irgendeiner der Sendevorrichtungen und des Speicherns der Nummer der Sendevorrichtungen, von denen die Daten kommen.

13. Verfahren nach Anspruch 12, wobei die Empfangsvorrichtung eine Einrichtung zum Senden von Daten an die Sendevorrichtungen über den Zwischenverstärker enthält und die Sendevorrichtungen eine Einrichtung zum Empfangen von Daten enthalten, ferner mit dem Schritt des Zuordnens einer Empfangswarteschlange an die Empfangsvorrichtung und einer Sendewarteschlange an jede der Sendevorrichtungen.

14. Verfahren nach Anspruch 13, wobei die Empfangsvorrichtung einen Host enthält und die Sendevorrichtungen Peripheriegeräte (23-35) enthalten, die eine Dateneingabe für den Host (19) schaffen.

15. Verfahren nach Anspruch 14, wobei der Zwischenverstärker einen Prozessor enthält, ferner mit dem Schritt des Erzeugens einer Unterbrechung für den Prozessor, wenn der Empfang von Daten erfaßt wird.

16. Verfahren nach Anspruch 13, wobei die Warteschlangenadressen eine vordere Zeigeradresse, die den ersten Eintrag angibt, und eine hintere Zeigeradresse enthalten, die den nächsten freien Raum für einen Eintrag angibt, ferner mit den Schritten des Inkrementierens des hinteren Zeigers jedesmal, wenn ein neuer Eintrag erfolgt, und des Inkrementierens des vorderen Zeigers jedesmal, wenn eine Pufferadresse von einer Warteschlange an eine andere übertragen wird.

17. Verfahren nach Anspruch 16, ferner mit dem Schritt des Speicherns eines Empfangseintrags für jeden der Puffer und eines Sendeeintrags für jeden der Puffer in einer Tabelle, wobei der Empfangseintrag die Adresse der nächsten freie Stelle im Puffer, an der empfangene Daten gespeichert werden können, speichert und der Sendeeintrag die Adresse des nächsten zu übertragenden Datenbytes vom Puffer speichert.

18. System, das eine Datensendevorrichtung und eine Datenempfangsvorrichtung enthält, wobei das System ferner einen Zwischenverstärker nach einem der Ansprüche 1 bis 8 enthält.

19. System nach Anspruch 18, wobei die Datenempfangsvorrichtung eine Einrichtung enthält, um Daten über den Zwischenverstärker an die Sendevorrichtungen zu senden, und die Sendevorrichtungen eine Einrichtung enthalten, um Daten zu empfangen, ferner mit einer Empfangswarteschlange, die der Empfangsvorrichtung zugeordnet ist, und einer Sendewarteschlange, die jeder der Sendevorrichtungen zugeordnet ist.

20. System nach Anspruch 19, in dem die Empfangsvorrichtung einen Host (19) enthält und die Sendevorrichtungen Peripheriegeräte (23-35) enthalten, die einen Dateneingang für den Host (19) schaffen.

## Revendications

1. Répéteur (21) dans un système qui comprend un dispositif émetteur de données, ledit répéteur (21) et un dispositif récepteur de données, le répéteur accumulant des données d'entrée en paquets en provenance dudit dispositif émetteur et retransmettant lesdits paquets de données vers ledit dispositif récepteur, ledit répéteur étant caractérisé en ce qu'il possède une structure de mémoire pour emmagasiner lesdites données dans ledit répéteur comportant :
(a) une mémoire tampon de données (415) :
(b) une file d'attente de réception (410) ayant une multiplicité d' entrées, chaque entrée étant capable d'emmagasiner une adresse de départ pour les paquets de données contenues dans ladite mémoire tampon et reçues dudit dispositif émetteur ;
(c) une file d'attente d'émission (20) ayant une multiplicité d'entrées dont chacune emmagasine les adresses de départ de paquets de données à transmettre vers le dispositif récepteur ; et
(d) des moyens (41) pour transférer lesdites adresses depuis ladite file d'attente de réception vers ladite file d'attente d'émission, ladite mémoire tampon et lesdites files d'attente étant chacune circulaire, et des moyens pour retransmettre lesdits paquets de données vers ledit dispositif récepteur.

2. Répéteur selon la revendication 1, dans lequel chaque entrée de file d'attente a une adresse comportant une partie de file d'attente supérieure et une partie de file d'attente inférieure, et le nombre d'entrées desdites parties de file d'attente passe d'une valeur maximale à zéro lorsqu'un incrément est ajouté à la dernière entrée de ladite multiplicité d'entrées de ladite file d'attente pour générer un report, et dans lequel ledit répéteur comprend des pointeurs (412, 411) pour désigner des adresses desdites files d'attente et comprenant, en outre, des moyens (41) pour générer des pointeurs comportant un premier registre pour emmagasiner une adresse supérieure et un second registre pour emmagasiner une adresse inférieure, le report en provenance dudit second registre n'étant pas couplé audit premier registre, si bien que, lorsque ladite valeur maximale est dépassée dans le second registre, l'adresse reviendra à sa valeur de départ de manière circulaire.

3. Répéteur selon la revendication 2, dans lequel ledit répéteur est relié à une multiplicité de dispositifs émetteurs dans ledit système et dans lequel une mémoire tampon et une file d'attente de réception sont associées à chacun desdits dispositifs émetteurs, lesdits moyens (41) de transfert transférant des adresses de chacune desdites files d' attente de réception associées à chacun desdits dispositifs émetteurs vers ladite file d'attente d'émission lorsque des données sont reçues, et qui comporte , en outre, des moyens pour établir une adresse de file d'attente de réception de base et des moyens pour ajouter à ladite adresse de file d'attente de réception de base un numéro associé à chaque dispositif émetteur pour définir l'adresse supérieure de la file d'attente de réception pour le dispositif émetteur associé.

4. Répéteur selon la revendication 3, dans lequel ledit répéteur comprend, en outre, des moyens (62) pour détecter la réception de données en provenance de n'importe lequel desdits dispositifs émetteurs, lesdits moyens (62) comprenant un registre pour emmagasiner le numéro du dispositif émetteur à partir duquel lesdites données sont en train d'arriver.

5. Répéteur selon la revendication 4, dans lequel ledit répéteur comprend des récepteurs/émetteurs (SLU) pour chacun desdits périphériques et ledit hôte.

6. Répéteur selon la revendication 5, dans lequel ledit répéteur comprend un processeur (41) et lesdits moyens (62) de détection comprennent des moyens pour générer une interruption à destination dudit processeur.

7. Répéteur selon la revendication 6, dans lequel lesdites adresses de file d'attente comprennent une adresse de pointeur avant (F) désignant la première entrée et un pointeur arrière (R) désignant 1' espace libre suivant disponible pour une entrée, et des moyens pour incrémenter ledit pointeur arrière chaque fois qu'une nouvelle entrée est effectuée et pour incrémenter ledit pointeur avant chaque fois qu'une adresse de mémoire tampon est transférée d'une file d'attente à une autre.

8. Répéteur selon la revendication 7, dans lequel ledit répéteur comprend, en outre, une table (417) ayant une entrée de réception pour chacune desdites mémoires tampon de données et une entrée d'émission pour chacune desdites mémoires tampon de données, 1' entrée de réception emmagasinant l'adresse de l'emplacement libre suivant de ladite mémoire tampon de données dans lequel des données reçues peuvent être emmagasinées et l'entrée d'émission emmagasinant l'adresse du multiplet de données suivant en provenance de ladite mémoire tampon de données à émettre.

9. Procédé de communication entre un dispositif émetteur de données et un dispositif récepteur de données dans un système qui comprend ledit dispositif émetteur de données, un répéteur (21) et ledit dispositif récepteur de données, ledit procédé étant caractérisé en ce qu'il comporte les étapes consistant :
(a) à accumuler des données d'entrée en paquets en provenance dudit dispositif émetteur au niveau dudit répéteur (21) dans une mémoire tampon de données (415) ;
(b) à entrer dans une file d'attente de réception (410) ayant une multiplicité d'entrées l'adresse de départ de chacun des paquets de données contenues dans ladite mémoire tampon de données (410) et reçues dudit dispositif émetteur ;
(c) à transférer lesdites adresses de départ de ladite file d'attente de réception vers une file d'attente d'émission (420) ayant une multiplicité d'entrées, dont chacune emmagasine 1' adresse de départ d'un paquet de données à transmettre vers ledit dispositif récepteur, ladite mémoire tampon de données et lesdites files d'attente étant chacune circulaire ; et
(d) à retransmettre lesdits paquets de données vers ledit dispositif récepteur.

10. Procédé selon la revendication 9, dans lequel chaque entrée de file d'attente a une adresse ayant une partie de file d'attente supérieure et une partie de file d'attente inférieure et le nombre d'entrées desdites parties de file d'attente passe d'une valeur maximale à zéro lorsqu'un incrément est ajouté à la dernière entrée de ladite multiplicité d'entrées de ladite file d'attente pour générer un report et dans lequel des pointeurs (411, 412) pour désigner des adresses dans lesdites files d'attente sont prévus et consistant, en outre, à générer lesdits pointeurs en emmagasinant ladite adresse supérieure dans un premier registre, à emmagasiner ladite adresse inférieure dans un second registre, le report en provenance dudit second registre n'étant pas couplé audit premier registre, si bien que, lorsque ladite valeur maximale est dépassée dans le second registre, l'adresse reviendra à sa valeur de départ de manière circulaire.

11. Procédé selon la revendication 10, dans lequel une multiplicité de dispositifs émetteurs sont prévus et consistant, en outre, à associer une mémoire tampon et une file d'attente de réception à chacun desdits dispositifs émetteurs, à transférer des adresses de chacune desdites files d'attente de réception vers ladite file d'attente d'émission lorsque des données sont reçues, à établir une adresse de file d'attente de réception de base et à ajouter à ladite adresse de file d'attente de réception de base un numéro associé à chaque dispositif émetteur pour définir l'adresse supérieure de la file d'attente de réception pour ledit dispositif émetteur.

12. Procédé selon la revendication 11, consistant, en outre, à détecter la réception (62) de données en provenance de n'importe lequel desdits dispositifs émetteurs et à emmagasiner le numéro des dispositifs émetteurs à partir desquels lesdites données sont en train d'arriver.

13. Procédé selon la revendication 12, dans lequel ledit dispositif récepteur de données comprend des moyens pour transmettre des données vers lesdits dispositifs émetteurs par l'intermédiaire dudit répéteur et lesdits dispositifs émetteurs comprennent des moyens pour recevoir des données , et consistant, en outre, à associer une file d'attente de réception audit dispositif récepteur et une file d'attente d'émission à chacun desdits dispositifs émetteurs.

14. Procédé selon la revendication 13, dans lequel ledit dispositif récepteur comporte un hôte et lesdits dispositifs émetteurs comportent des périphériques (23 à 35) fournissant une entrée de données audit hôte (19).

15. Procédé selon la revendication 14, dans lequel ledit répéteur comprend un processeur et consistant, en outre, à générer une interruption à destination dudit processeur lors de la détection de la réception de données.

16. Procédé selon la revendication 13, dans lequel lesdites adresses de file d'attente comprennent une adresse de pointeur avant désignant la première entrée et une adresse de pointeur arrière désignant l'espace libre suivant disponible pour une entrée, et consistant, en outre, à incrémenter ledit pointeur arrière chaque fois qu'une nouvelle entrée est effectuée et à incrémenter ledit pointeur avant chaque fois qu'une adresse de mémoire tampon est transférée d'une file d'attente à une autre.

17. Procédé selon la revendication 16 , et consistant, en outre, à emmagasiner dans une table une entrée de réception pour chacune desdites mémoires tampon et une entrée d'émission pour chacune desdites mémoires tampon, l'entrée de réception emmagasinant l'adresse de l'emplacement libre suivant de ladite mémoire tampon dans lequel des données reçues peuvent être emmagasinées et l'entrée d'émission emmagasinant l'adresse du multiplet de données suivant en provenance de ladite mémoire tampon à émettre.

18. Système comprenant un dispositif émetteur de données et un dispositif récepteur de données, dans lequel ledit système comprend, en outre, un répéteur selon l'une des revendications 1 à 8.

19. Système selon la revendication 18, dans lequel ledit dispositif récepteur de données comprend des moyens pour transmettre des données vers lesdits dispositifs émetteurs par l'intermédiaire dudit répéteur et lesdits dispositifs émetteurs comprennent des moyens pour recevoir des données et qui comprend, en outre, une file d'attente de réception associée au dispositif récepteur et une file d'attente d'émission associée à chacun desdits dispositifs émetteurs.

20. Système selon la revendication 19, dans lequel ledit dispositif récepteur comporte un hôte (19) et lesdits dispositifs émetteurs comportent des périphériques (23 à 35) fournissant une entrée de données audit hôte (19).
